# EUROPEAN PATENT APPLICATION

(11) **EP 4 838 925 A1**
(43) Date of publication of application: **11.11.2026**
(21) Application number: 26176043.3
(22) Date of filing: 01.05.2026
(51) Int. Cl.: H04W 12/08, H04W 74/00, H04W 74/0833, H04W 74/0836

(54) **RANDOM ACCESS CHANNEL ADAPTATION TECHNIQUES**

(30) Priority: 06.05.2025 US 202563800904 P
(71) Applicant: Apple Inc., Cupertino, CA 95014 (US)
(72) Inventor: CHENG, Peng, Cupertino, 95014 (US); WU, Dan, Cupertino, 95014 (US); HU, Haijing, Cupertino, 95014 (US); LI, Qiming, Cupertino, 95014 (US)
(74) Representative: Zacco Denmark A/S

(57) **Abstract**

The present disclosure generally relates to random access channel (RACH) adaptation techniques. In some implementations, a user equipment (UE) determines one or more resources to monitor for a RACH adaptation indicator based on a connectivity state of the UE and a capability of the UE to support RACH adaptation. Accordingly, the UE monitors the one or more resources for the RACH adaptation indicator. In some implementations, the UE receives an indication of one or more trigger conditions for RACH adaptation and enables RACH adaptation in response to determining that the one or more trigger conditions are met.

## Description

### TECHNICAL FIELD

The present disclosure relates generally to wireless communication, and more specifically to random access channel (RACH) adaptation techniques.

### BACKGROUND

Wireless communication networks provide integrated communication platforms and telecommunication services to wireless user devices. Example telecommunication services include telephony, data (e.g., voice, audio, video), messaging, and/or other services. The wireless communication networks have wireless access nodes that exchange wireless signals with the wireless user devices using one or more wireless network protocols, such as protocols described in various telecommunication standards promulgated by the European Telecommunications Standards Institute (ETSI) Third Generation Partnership Project (3GPP). The wireless communication networks facilitate mobile broadband service using technologies such as orthogonal frequency-division multiple access (OFDMA), multiple input multiple output (MIMO), advanced channel coding, massive MIMO, beamforming, and/or other features.

### SUMMARY

One aspect of the present disclosure relates to a method including: determining one or more resources to monitor for a random access channel (RACH) adaptation indicator based on a connectivity state of a user equipment (UE) and a capability of the UE to support RACH adaptation; and monitoring the one or more resources for the RACH adaptation indicator.

In some implementations, the connectivity state of the UE includes a radio resource control (RRC) CONNECTED state, an RRC IDLE state, or an RRC INACTIVE state.

In some implementations, monitoring the one or more resources includes monitoring at least one paging occasion (PO) per paging cycle or per system information modification period for paging messages with a RACH adaptation indicator while the UE is in an RRC CONNECTED state.

In some implementations, the method further includes receiving downlink control information (DCI) format 1_0 with a physical downlink control channel (PDCCH) order including the RACH adaptation indicator.

In some implementations, the method further includes overwriting a RACH resource activation or deactivation status indicated by a DCI associated with a paging radio network temporary identifier (P-RNTI).

In some implementations, the method further includes receiving a first system information block (SIB1) with a bit indicating whether semi-static RACH adaptation is enabled or disabled.

In some implementations, reception of the SIB1 occurs while the UE is in an RRC IDLE state.

In some implementations, reception of the SIB1 occurs while the UE is in an RRC INACTIVE state.

In some implementations, semi-static RACH adaptation is enabled and the method further includes: discarding RACH adaptation indicators from paging DCI messages when the bit is set to 1.

In some implementations, semi-static RACH adaptation is disabled and the method further includes: monitoring paging DCI messages for RACH adaptation indicators when the bit is set to 0.

In some implementations, semi-static RACH adaptation is enabled and the method further includes: monitoring paging DCI messages for RACH adaptation indicators, irrespective of whether the bit is set to 0 or 1.

In some implementations, the method further includes: identifying a misaligned activation or deactivation status between a semi-static RACH adaptation indication and a dynamic RACH adaptation indication in a paging DCI message; and overwriting the semi-static RACH adaptation indication with the dynamic RACH adaptation indication from the paging DCI message.

In some implementations, monitoring the one or more resources includes monitoring a next broadcast control channel (BCCH) occasion for a SIB1 update after receiving a paging short message.

In some implementations, monitoring the one or more resources includes monitoring a current BCCH period for a SIB1 update after receiving a paging short message when the bit in SIB1 indicates that semi-static RACH adaptation is enabled.

In some implementations, monitoring the one or more resources includes monitoring a current BCCH period for a SIB1 update after receiving a paging short message that enables immediate acquisition of SIB1 updates.

In some implementations, monitoring the one or more resources includes monitoring a next BCCH period for a SIB1 update after receiving a paging short message that disables immediate acquisition of SIB1 updates.

In some implementations, the method further includes receiving a first system information block (SIB1) while the UE is in an RRC CONNECTED state, the SIB1 including a bit indicating whether semi-static RACH adaptation is enabled or disabled.

In some implementations, monitoring the one or more resources includes monitoring at least one PO per BCCH modification period or per paging cycle for SIB1 updates when the bit in SIB1 indicates that semi-static RACH adaptation is enabled.

In some implementations, the method further includes receiving a handover command with a bit indicating whether RACH adaptation is enabled for a target cell.

In some implementations, the method further includes enabling RACH adaptation for the target cell during handover in accordance with the handover command.

In some implementations, the method further includes receiving, via the target cell, a SIB 1 including a bit indicating whether RACH adaptation is enabled for the target cell.

In some implementations, the method further includes enabling RACH adaptation for the target cell based on the bit in the handover command and the bit in the SIB1.

Another aspect of the present disclosure relates to a method including: receiving an indication of one or more trigger conditions for RACH adaptation; and enabling RACH adaptation for a UE in response to determining that the one or more trigger conditions are met.

In some implementations, receiving the indication of the one or more trigger conditions includes receiving a SIB that indicates a unified access control (UAC) threshold for enabling RACH adaptation.

In some implementations, enabling RACH adaptation for the UE includes enabling RACH adaptation in response to determining that a UAC access probability of the UE satisfies the UAC threshold indicated by the SIB.

In some implementations, a set of UAC thresholds are configured for RACH adaptation, each UAC threshold corresponding to a specific combination of access category and access identity.

In some implementations, one UAC threshold is configured for all access categories and access identities.

In some implementations, the SIB further indicates a probability to use for determining whether to activate RACH adaptation.

In some implementations, determining that the one or more trigger conditions are met includes determining that paging adaptation is enabled for the UE.

In some implementations, RACH adaptation is disabled for the UE when paging adaptation is disabled.

In some implementations, enabling RACH adaptation includes enabling RACH adaptation during a paging frame (PF) derived from a paging configuration of the UE.

In some implementations, RACH adaptation is disabled in frames other than the PF derived from the paging configuration of the UE.

In some implementations, RACH adaptation is enabled in a number of frames that follow the PF derived from the paging configuration of the UE, and where the number of frames is configured by a SIB.

In some implementations, determining that the one or more trigger conditions are met includes determining that synchronization signal block (SSB) or on-demand SSB (OD-SSB) adaptation is enabled for the UE.

In some implementations, RACH adaptation is disabled when SSB or OD-SSB adaptation is disabled for the UE.

In some implementations, determining that the one or more trigger conditions are met includes determining that an SSB periodicity is less than a network-configured threshold.

In some implementations, RACH adaptation is disabled when the SSB periodicity is greater than or equal to the threshold.

In some implementations, determining that the one or more trigger conditions are met includes determining that a number of RACH preamble retransmissions performed by the UE is greater than a network-configured threshold.

In some implementations, the method further includes using a set of additional RACH resources configured for RACH adaptation when the one or more trigger conditions are met.

In some implementations, the UE is unable to switch from the set of additional RACH resources to a default RACH resource after switching from the default RACH resource to the additional RACH resources.

In some implementations, the method further includes using the default RACH resource in a subsequent RACH procedure.

In some implementations, receiving the indication of the one or more trigger conditions includes receiving a medium access control (MAC) control element (MAC-CE) that triggers RACH adaptation and OD-SSB adaptation.

In some implementations, the method further includes disabling RACH adaptation after OD-SSB adaptation is deactivated.

In some implementations, OD-SSB adaptation is deactivated by reception of a second MAC-CE or after a threshold number of SSB adaptation occasions has elapsed.

In some implementations, receiving the indication of the one or more trigger conditions includes receiving a group common DCI message that triggers RACH adaptation and SSB adaptation.

In some implementations, the method further includes disabling RACH adaptation after receiving a second group common DCI message that deactivates SSB adaptation.

Another aspect of the present disclosure relates to a method including: determining one or more resources to use for transmission of a RACH adaptation indicator based on a connectivity state of a UE and a capability of the UE to support RACH adaptation; and transmitting, via the one or more resources, a message including the RACH adaptation indicator.

In some implementations, the connectivity state of the UE includes an RRC CONNECTED state, an RRC IDLE state, or an RRC INACTIVE state.

In some implementations, the method further includes transmitting DCI format 1_0 with a PDCCH order including the RACH adaptation indicator.

In some implementations, the method further includes overwriting a RACH resource activation or deactivation status indicated by a DCI associated with a P-RNTI.

In some implementations, the method further includes transmitting a SIB1 with a bit indicating whether semi-static RACH adaptation is enabled or disabled.

In some implementations, transmission of the SIB1 occurs while the UE is in an RRC IDLE state.

In some implementations, transmission of the SIB1 occurs while the UE is in an RRC INACTIVE state.

In some implementations, transmitting the message via the one or more resources includes transmitting a SIB1 update in a next BCCH occasion after transmitting a paging short message.

In some implementations, transmitting the message via the one or more resources includes transmitting a SIB1 update in a current BCCH occasion when the bit in SIB1 indicates that semi-static RACH adaptation is enabled.

In some implementations, transmitting the message via the one or more resources includes transmitting a SIB1 update in a current BCCH occasion after transmitting a paging short message that enables immediate acquisition of SIB1 updates.

In some implementations, transmitting the message via the one or more resources includes transmitting a SIB1 update in a next BCCH occasion after transmitting a paging short message that disables immediate acquisition of SIB1 updates.

In some implementations, the method further includes transmitting a SIB1 while the UE is in an RRC CONNECTED state, the SIB1 including a bit indicating whether semi-static RACH adaptation is enabled or disabled.

In some implementations, the method further includes transmitting a handover command with a bit indicating whether RACH adaptation is enabled for a target cell.

Another aspect of the present disclosure relates to a method including: configuring one or more trigger conditions for RACH adaptation; and enabling RACH adaptation for a UE in response to determining that the one or more trigger conditions are met.

In some implementations, configuring the one or more trigger conditions includes transmitting a SIB that indicates a UAC threshold for enabling RACH adaptation.

In some implementations, a set of UAC thresholds are configured for RACH adaptation, each UAC threshold corresponding to a specific combination of access category and access identity.

In some implementations, one UAC threshold is configured for all access categories and access identities.

In some implementations, the SIB further indicates a probability to use for determining whether to activate RACH adaptation.

In some implementations, determining that the one or more trigger conditions are met includes determining that paging adaptation is enabled for the UE.

In some implementations, RACH adaptation is disabled for the UE when paging adaptation is disabled.

In some implementations, enabling RACH adaptation includes enabling RACH adaptation during a PF associated with a paging configuration of the UE.

In some implementations, RACH adaptation is disabled in frames other than the PF associated with the paging configuration of the UE.

In some implementations, RACH adaptation is enabled in a number of frames that follow the PF associated with the paging configuration of the UE, and where the number of frames is configured by a SIB.

In some implementations, determining that the one or more trigger conditions are met includes determining that SSB or OD-SSB adaptation is enabled for the UE.

In some implementations, RACH adaptation is disabled when SSB or OD-SSB adaptation is disabled for the UE.

In some implementations, determining that the one or more trigger conditions are met includes determining that an SSB periodicity is less than a network-configured threshold.

In some implementations, RACH adaptation is disabled when the SSB periodicity is greater than or equal to the threshold.

In some implementations, determining that the one or more trigger conditions are met includes determining that a number of RACH preamble retransmissions performed by the UE is greater than a network-configured threshold.

In some implementations, configuring the one or more trigger conditions includes transmitting a MAC-CE that triggers RACH adaptation and OD-SSB adaptation.

In some implementations, the method further includes disabling RACH adaptation after OD-SSB adaptation is deactivated.

In some implementations, OD-SSB adaptation is deactivated by a second MAC-CE or after a threshold number of SSB adaptation occasions has elapsed.

In some implementations, configuring the one or more trigger conditions includes transmitting a group common DCI message that triggers RACH adaptation and SSB adaptation.

In some implementations, the method further includes disabling RACH adaptation after transmitting a second group common DCI message that deactivates SSB adaptation.

Another aspect of the present disclosure relates to an apparatus including: one or more processors; and memory storing instructions that, when executed, cause the one or more processors to perform any of the foregoing operations.

Another aspect of the present disclosure relates to a baseband processor configured to perform any of the foregoing operations.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates an example wireless network, according to some implementations.
FIG. 2 illustrates an example physical random access channel (PRACH) resource diagram, according to some implementations.
FIG. 3 illustrates an example unified access control (UAC) scheme, according to some implementations.
FIG. 4 illustrates two example paging adaptation schemes, according to some implementations.
FIG. 5 illustrates two example on-demand synchronization signal block (OD-SSB) transmission schemes, according to some implementations.
FIGs. 6-9 illustrates flowcharts of example methods for random access channel (RACH) adaptation, according to some implementations.
FIG. 10 illustrates an example user equipment (UE), according to some implementations.
FIG. 11 illustrates an example access node, according to some implementations.

### DETAILED DESCRIPTION

The present disclosure generally relates to adaptation of common downlink and uplink transmissions to support Third Generation Partnership Project (3GPP) New Radio (NR) Network Energy Saving (NES) objectives, such as on-demand synchronization signal block (OD-SSB) transmission for CONNECTED mode user equipments (UEs). SSB transmissions, physical random access channel (PRACH) opportunities, and paging occasions (POs) are typically configured with a fixed periodicity and spatial allocation. Such static configurations may not fully account for dynamic variations in cell loading or energy-saving targets. Adaptation of SSB periodicity, PRACH resource allocation (in time and space), and confinement of POs in the time-domain can improve NES performance without increasing paging latency or adversely impacting legacy UEs.

In conventional networks, only fully dynamic triggers like paging downlink control information (DCI) are allowed to initiate RACH adaptation. This process typically involves sending group-common DCI, which can increase signaling overhead and latency. Semi-static adaptation via System Information Block 1 (SIB1) is not currently supported for CONNECTED UEs. There is also uncertainty as to when a CONNECTED UE should monitor for SIB1 updates, and SIB1 can only be updated in the next broadcast channel (BCCH) modification period (which can introduce latency). Moreover, OD-SSB transmission and paging adaptation can increase RACH collisions during handover (HO) or periods of high network traffic. These issues can result in lower energy savings, more collisions, and unpredictable RACH performance.

The RACH adaptation framework described herein specifies when UEs should monitor both dynamic signaling (e.g., DCI format 1_0) and semi-static signaling (e.g., SIB1 updates) to support dynamic and semi-static RACH adaptation. In some implementations, a CONNECTED UE may be configured to monitor a single PO per paging cycle for paging DCI. The DCI message can include a 1-bit indication of additional PRACH resource availability. In other implementations, a new bit in SIB1 may enable or disable semi-static RACH adaptation for IDLE/INACTIVE UEs, causing the UE to acquire SIB1 updates in the current BCCH period after a paging short message. Some aspects of the present disclosure relate to conditional triggering of RACH adaptation without explicit signaling, e.g., based on unified access control (UAC)-derived access probability thresholds in SIB, paging configuration parameters, OD-SSB or SSB periodicity thresholds, and/or preamble retransmission counts. A joint signaling indicator-such as a MAC-CE or group-common DCI that controls OD-SSB or SSB adaptation-can simultaneously enable or disable RACH adaptation.

In accordance with the RACH adaptation techniques described herein, when network load increases the network can provide additional PRACH resources to 3GPP Release 19 (Rel-19) UEs (e.g., UEs that support NES functions). To do so, the network can transmit DCI 1_0 scrambled with a paging radio network temporary identifier (P-RNTI) that includes a validity time duration and a 1-bit flag that activates a secondary PRACH resource pool with a non-uniform spatial mapping relative to SSB beams. Accordingly, a CONNECTED UE can monitor one PO per paging cycle, decode the 1-bit flag in the physical downlink control channel (PDCCH) order, and opt to use these additional PRACH resources for initial access. If the network later broadcasts a deactivation indication (either via the same DCI or expiration of the validity timer), the UE may revert to the legacy PRACH configuration.

The RACH adaptation techniques described herein can reduce signaling latency because the UEs know precisely when to monitor for RACH adaptation indications. The described framework can also lower signaling overhead, as group-common DCI messages can be reused or minimized. Additionally, the present disclosure can help ensure alignment between the UE and the network on RACH resource usage, which can reduce the frequency of RACH collisions. The described techniques maintain/preserve legacy UE performance and do not increase paging latency or disrupt UEs that do not support NES features. Furthermore, conditional triggering via UAC and SIB thresholds allows the network to implicitly adapt RACH behavior in response to real-time load fluctuations, which improves energy savings and system efficiency without additional signaling overhead.

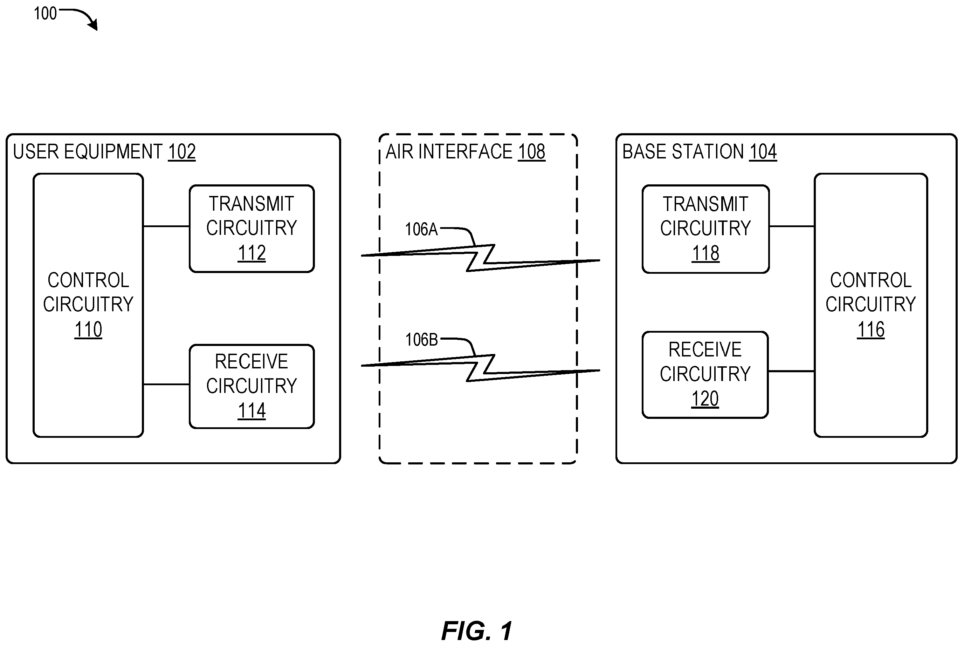

FIG. 1 illustrates an example wireless network 100, according to some implementations. The wireless network 100 includes a UE 102 and a base station 104, which are connected via one or more channels 106A, 106B across an air interface 108. The UE 102 and base station 104 communicate using a system that supports controls for managing the access of the UE 102 to a network via the base station 104.

In some implementations, the wireless network 100 is a standalone (SA) network, e.g., that incorporates Fifth Generation (5G) NR. In some other implementations, the wireless network 100 is a non-standalone (NSA) network that incorporates Long Term Evolution (LTE) and 5G NR. In these implementations, the wireless network 100 may be an Evolved Universal Terrestrial Radio Access (E-UTRA)-NR Dual Connectivity (EN-DC) network, or an NR-EUTRA Dual Connectivity (NE-DC) network. Furthermore, wireless networks implementing one or more other types of communication standards are possible, including future 3GPP systems (e.g., Sixth Generation "6G"), Institute of Electrical and Electronics Engineers (IEEE) 802.11 technology, or the like. While aspects may be described herein using terminology commonly associated with 5G NR, aspects of the present disclosure can be applied to other systems, such as systems subsequent to 5G (e.g., 6G).

In the wireless network 100, the UE 102 and any other UE may be, for example, a laptop computer, smartphone, tablet computer, machine-type device (such as smart meters or specialized devices for healthcare), intelligent transportation system, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider, or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include application-specific circuitry, baseband circuitry, or any of various combinations thereof. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and/or control circuitry 110 may be integrated in various ways to implement the operations described herein. The control circuitry 110 may be adapted or configured to perform various operations, such as those described elsewhere in this disclosure related to a UE. For example, the control circuitry 110 can determine whether to enable or disable RACH adaptation based on an indication in SIB1.

The transmit circuitry 112 can perform various operations described herein. For example, the transmit circuitry 112 can transmit a random access message using additional PRACH resources that are activated based on network conditions. Additionally, the transmit circuitry 112 may transmit using multiplexed uplink physical channels. The uplink physical channels can be multiplexed, e.g., according to time division multiplexing (TDM) or frequency division multiplexing (FDM), and in some implementations, along with carrier aggregation. The transmit circuitry 112 may be configured to receive block data from the control circuitry 110 for transmission on the air interface 108.

The receive circuitry 114 can perform various operations described herein. For example, the receive circuitry 114 can receive SIB1 with a RACH adaptation indication for CONNECTED UEs. Additionally, the receive circuitry 114 may receive multiplexed downlink physical channels from the air interface 108 and relay the physical channels to the control circuitry 110. The downlink physical channels can be multiplexed, e.g., according to TDM or FDM, e.g., along with carrier aggregation. The transmit circuitry 112 and the receive circuitry 114 may transmit and receive, respectively, both control data and content data (e.g., messages, images, video) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR wireless network 100, and the term "E-UTRAN" or the like may refer to a base station 104 that operates in an LTE wireless network 100. The UE 102 utilizes connections (or channels) 106A, 106B, each of which includes a physical communications interface or layer.

The base station 104 circuitry may include control circuitry 116 coupled (directly or indirectly) with transmit circuitry 118 and/or receive circuitry 120. The transmit circuitry 118 and receive circuitry 120 may each be coupled (directly or indirectly) with one or more antennas that may be used to enable communications via the air interface 108. The transmit circuitry 118 and receive circuitry 120 may be adapted to transmit and receive data, respectively, addressed to any UE connected to the base station 104. The receive circuitry 120 may receive uplink physical channel transmissions from one or more UEs, including the UE 102.

In FIG. 1, the one or more channels 106A, 106B are illustrated as an air interface to enable communicative coupling, and may be consistent with cellular communications protocols, such as an LTE protocol, Advanced LTE (LTE-A) protocol, LTE-based access to unlicensed spectrum (LTE-U), NR protocol, NR-based access to unlicensed spectrum (NR-U) protocol, and/or any other communications protocol(s). In some implementations, the UE 102 may directly exchange communication data via a ProSe interface. The ProSe interface may alternatively be referred to as a sidelink (SL) interface and may include one or more logical channels, including but not limited to a physical sidelink control channel (PSCCH), a physical sidelink discovery channel (PSDCH), or a physical sidelink broadcast channel (PSBCH).

The present disclosure generally relates to UE monitoring behaviors and conditional triggers for dynamic and semi-static RACH adaptation. Some aspects of the present disclosure relate to NES objectives for NR, such as OD-SSB SCell operation for CONNECTED mode UEs. Adaptation of common signal/channel transmissions may improve NES. This includes adaptation of SSB in the time-domain (e.g., adapting periodicity), adaptation of PRACH in the time-domain, adaptation of PRACH in the spatial-domain (e.g., non-uniform PRACH resources per SSB), adaptation of POs (e.g., confining POs in the time-domain), and so on. This adaptation will not increase paging latency or negatively impact legacy UE operations. For NES adaptation of SSB, the configuration or adaptation of a longer periodicity for SSB/SIB1 and/or uplink random access opportunities may involve signaling mechanism to inform the UE 102 about how the configuration or adaptation of common signals/channels may impact system information acquisition, initial access, RRM/RLM/BM measurements, and the performance of legacy UEs and other UEs that do not support the techniques described herein.

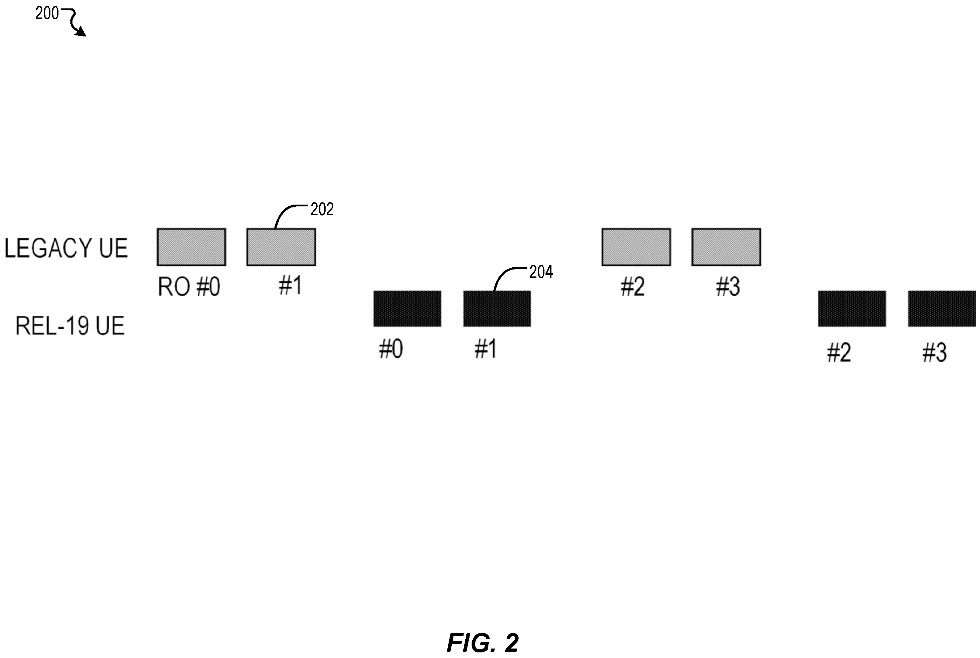

Two sets of PRACH resources can be used in different scenarios. One additional set of PRACH resources can be used for dynamically adapting to NES cell loading changes. Legacy UEs may be configured to use legacy PRACH resources with a sparse periodicity. An additional set for Rel-19 UEs can be dynamically provided when cell loading is high (as shown in FIG. 2). In existing networks, only dynamic triggers (e.g., DCI of a paging operation) is allowed for RACH adaptation (e.g., semi-static RACH adaptation is not allowed). For DCI-based adaptation for additional PRACH resources, DCI 1_0 with P-RNTI indicates availability information for additional PRACH resources from a reference point and for a validity time duration. The validity time duration for availability may be configured by higher layer signaling or predefined. Details such as the location of the reference point, the value/granularity of the validity time duration, and whether DCI can be used to explicitly deactivate additional PRACH resources are currently under discussion.

When DCI signaling triggers RACH adaptation, a paging DCI includes a validity time duration. For adaption of PRACH in the time-domain for a connected mode UE (such as the UE 102), a 1-bit field in DCI 1_0 with C-RNTI is used to trigger PRACH (e.g., PDCCH order) to indicate whether additional PRACH resource(s) are available for the triggered PRACH. Details such as UE behavior (e.g., applicable resources for PRACH mask index) when additional PRACH resources are indicated and the process of reusing existing bits for the 1-bit indication are currently under discussion.

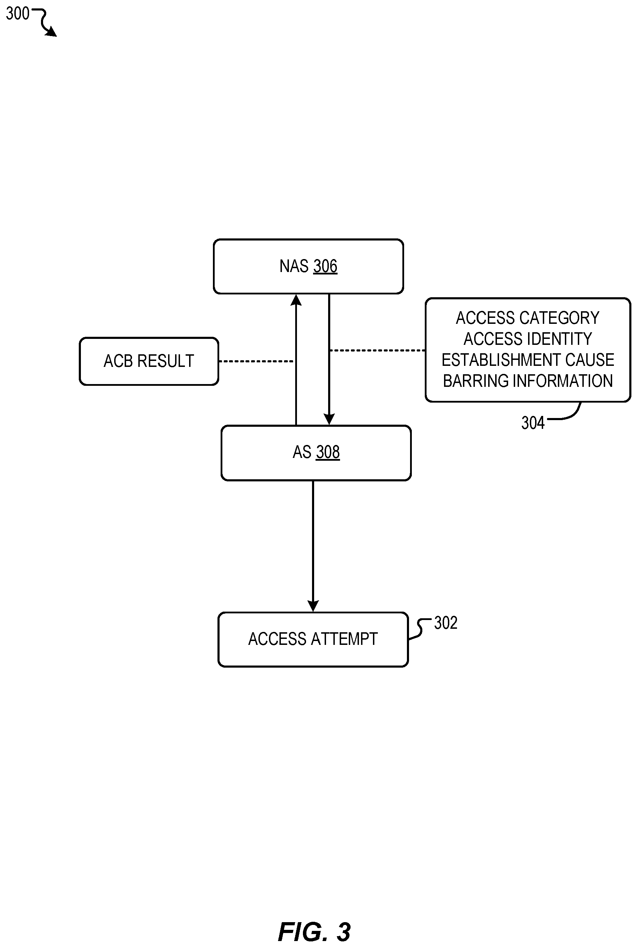

UAC was introduced in 3GPP Release 15. With UAC, the NG-RAN broadcasts barring control information (e.g., a probability) associated with Access Categories and Access Identities. An example UAC scheme is shown in FIG. 3. For network sharing, the barring control information can be set individually for each PLMN. The UE 102 determines whether an access attempt is authorized based on the barring information broadcast for the selected PLMN, as well as the selected Access Category and Access Identity for the access attempt. For example, the UE 102 may draw a coin according to the indicated probability. Additional details about Access Identities and Access Categories are specified in Section 6.22.2.2 and 6.22.2.3 of 3GPP TS 22.261.

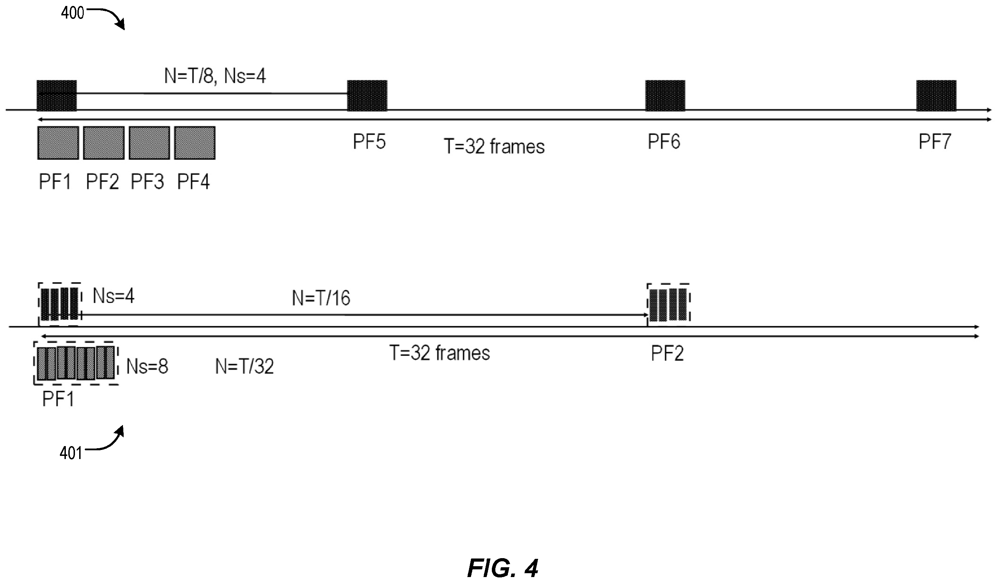

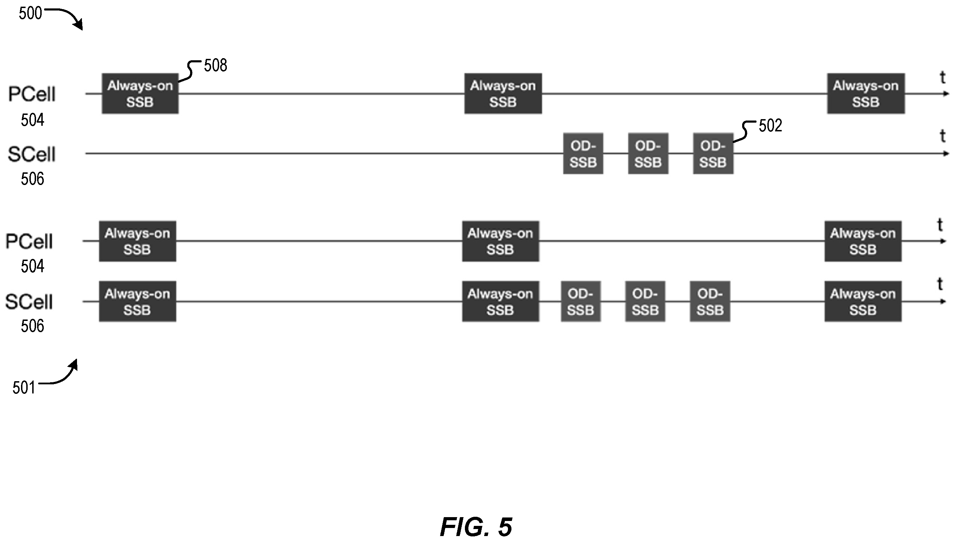

Several paging adaptation schemes are supported in Rel-19 NES. These paging adaptation schemes, which are shown in FIG. 4, involve bundling paging frames (PFs), extending the values of N to have an increased interval between PFs (e.g., T/64, T/128), and compensating for the decrease in the number of PFs by increasing the number of POs per PF. This effectively concentrates PF/PF to allow the gNB to spend more time in sleep mode. However, this approach can lead to RACH collisions. OD-SSB is another Rel-19 NES feature. An example OD-SSB transmission scheme is depicted in FIG. 5. The purpose of OD-SSB is to send additional SSBs to help with UE measurement during HO and to reduce the latency of SCell activation. However, OD-SSB transmission can also lead to RACH collision during HO.

There are some issues with how CONNECTED UEs monitor for dynamic signaling (such as DCI). In legacy systems, the times at which an IDLE/INACTIVE UE monitors for paging messages are explicitly defined. However, there is no such definition for CONNECTED UEs. In legacy schemes, a CONNECTED UE can monitor any PO for system information change indications and/or public warning system (PWS) notifications. Also, there are issues with how IDLE/INACTIVE UEs monitor semi-static RACH adaptation via SIB updates. Semi-static RACH adaptation via SIB is useful during HO. DCI signaling is not applicable during HO. In legacy schemes, SIB1 can be updated only after the next BCCH modification, which introduces latency. There is also some uncertainty regarding when a CONNECTED UE monitors semi-static RACH adaptation via SIB updates. In legacy schemes, there is no constraint on when a CONNECTED UE acquires SIB1 updates.

If only dynamic triggers (e.g., paging DCI) are allowed for RACH adaptation, this involves sending group common DCI, which can increase signaling overhead and latency. Group common DCI can be unreliable, and feedback is typically not provided for group common DCI. If the UE 102 is unable to decode group common DCI, the UE 102 and the network (e.g., the base station 104) may not be aligned on which RACH resources to use, which can lead to RACH failures. A validity duration may be introduced for group common DCI. However, if the UE 102 misses the group common DCI, the UE 102 will not know when the validity duration has expired.

Some aspects of the present disclosure involve specifying when the UE 102 should monitor dynamic/semi-static signaling for RACH adaptation. For example, UEs in a CONNECTED state may be configured to monitor dynamic signaling (such as paging DCI) at specific times. Likewise, UEs in an IDLE/INACTIVE state may be configured to monitor semi-static signaling (for SIB1 updates) at specific times. This can reduce signaling latency for UEs to enable RACH adaptation. UEs in a CONNECTED state may also be configured to monitor semi-static signaling (for SIB1 updates) at specific times.

In accordance with the framework described herein, if a CONNECTED UE is configured with RACH adaptation, the UE adopts the same monitoring behavior as IDLE/INACTIVE UEs. For example, the UE 102 shall monitor at least one PO for paging messages with RACH adaptation indications per paging cycle according to the PF/PO formula defined in 3GPP TS 38.304. Alternatively, the UE 102 can monitor any PO for paging messages with RACH adaptation indications (as legacy CONNECTED UEs do), but the UE 102 may be configured to monitor at least one PO per system information modification period or BCCH modification period.

Alternatively, the UE 102 can monitor any PO for paging messages with RACH adaptation indications (as legacy CONNECTED UEs do), but the UE 102 may be configured to monitor at least one PO per paging cycle. In some implementations, the UE 102 does not monitor DCI addressed with a P-RNTI, but the UE 102 does monitor DCI 1-0 for PDCCH order(s) with a RACH adaptation indication. If DCI 1-0 for a PDCCH order with a RACH adaptation indication is received, the indication may overwrite the additional RACH resource activation/deactivation status indicated by DCI addressed with the P-RNTI.

For IDLE/INACTIVE UEs, a bit may be added to SIB1 to enable/disable semi-static RACH adaptation. For example, when this bit is set to 1, semi-static RACH adaptation is enabled starting from the BCCH modification period in which the UE 102 decodes the indication, and the UE 102 ignores the paging DCI for RACH adaptation. When the bit is set to 0, semi-static RACH adaptation is disabled starting from the BCCH modification period in which the UE 102 decodes the indication and the UE 102 does not monitor the paging DCI for RACH adaptation. Alternatively, when this bit is set to 1, semi-static RACH adaptation is enabled starting from the BCCH modification period in which the UE 102 decodes the indication, but the UE 102 continues to monitor the paging DCI for RACH adaptation. When the bit is set to 0, semi-static RACH adaptation is disabled starting from the BCCH modification period in which the UE 102 decodes the indication and the UE 102 continues to monitor the paging DCI for RACH adaptation. If the UE 102 identifies a misaligned enable/disable status on RACH adaptation between the indication in SIB1 and the paging DCI, the UE prioritizes the indication in the paging DCI to determine whether RACH adaptation is enabled. The indication in SIB1 can be disregarded. In some implementations, the UE 102 monitors the next BCCH for a SIB1 update after reception of a paging short message. For a UE that supports RACH adaptation, if the indication in SIB1 is enabled, the UE 102 can monitor for SIB1 updates in the current BCCH period after reception of a paging short message. There is no need to modify the paging short message payload. A new bit can also be added to paging short messages. When this bit is set to a specific value, the UE 102 acquires SIB1 updates immediately. For a UE that supports RACH adaptation, if the indication in SIB1 is enabled, the UE 102 can monitor for SIB1 updates in the current BCCH after reception of a paging short message with the new bit enabled. Upon reception of a paging short message with the new bit disabled, the UE 102 can monitor for SIB 1 updates in the next BCCH.

A new bit for CONNECTED UEs can be added to SIB1 too. For a CONNECTED UE that supports RACH adaptation, if the indication in SIB1 is enabled, the UE 102 will monitor at least one PO per BCCH modification period for SIB1 updates. Alternatively, the UE 102 may be configured to monitor at least one PO per paging cycle for SIB1 updates. In some implementations, one bit can be added to a HO command to indicate that RACH adaptation for a target cell is enabled. For a CONNECTED UE that supports RACH adaptation, if this bit is enabled, the UE 102 will apply RACH adaptation for the target cell during HO, regardless of the new bit in SIB 1 for target cell. Alternatively, the UE 102 may apply RACH adaptation for the target cell during HO if the new bit in SIB1 of the target cell is also enabled. Otherwise, the UE 102 will not apply RACH adaptation.

For conditional triggering of RACH adaptation, a UE 102 may consider additional RACH resources as activated for triggering RACH adaptation when specific condition(s) are met. In accordance with the framework described herein, RACH adaptation, which is usually triggered when system load is high, can be implemented via implicit triggering without signaling. When a UE 102 determines that system load is high (e.g., based on UAC parameters), the approach described herein can help distinguish UEs of different access categories and/or access identities. When paging adaptation is enabled, RACH collisions can occur as paging adaptation increases the ratio of PF/PO. When OD-SSB is triggered and a re-transmission number exceeds a given threshold, the network may configure one signaling indication to simultaneously trigger RACH adaptation and other NES features (such as OD-SSB).

For conditional triggering via UAC, the access probability of UAC for each access category and access identity can reflect network traffic/load status. Within SIB, one or more UAC access probability thresholds can be defined. After SIB reception, the UE 102 compares the applied UAC access probability with the specified threshold to determine whether to activate RACH adaptation. In some examples, multiple access probability thresholds are configured, and each threshold corresponds to an [Access Category, Access Identity] pair. In other examples, one threshold is configured for all combinations of [Access Category, Access Identity].

Another probability indication can be added to SIB in some cases. If one or more of the conditions discussed above are met, the UE 102 can draw a coin according to the configured probability to determine whether to activate RACH adaptation. This approach can help differentiate UEs of different access categories and access identities (e.g., when multiple access probability thresholds are configured for different pairs of access categories and access identities).

For conditional triggering via paging adaptation in SIB, the network can configure RACH adaptation to be implicitly triggered when paging adaptation is enabled. RACH adaptation may be implicitly deactivated when paging adaptation is disabled. In SIB, the network may configure RACH adaptation to be implicitly triggered during the PF which is derived from the Rel-19 paging configuration. RACH adaptation may be implicitly deactivated (i) in other frames except for the PF which is derived from the Rel-19 paging configuration or (ii) when paging adaptation is disabled. In SIB, the network may configure RACH adaptation to be implicitly triggered during frames (such as the PF and the following *X* frames, where *X* is configured by SIB) that are derived from the Rel-19 paging configuration. RACH adaptation may be implicitly deactivated (i) in frames other than the frames outside of PF+ *X* or (ii) when paging adaptation is disabled.

For conditional triggering via OD-SSB or SSB adaptation, the network may configure (in SIB) RACH adaptation to be implicitly triggered when OD-SSB or SSB adaptation is triggered. RACH adaptation may be implicitly deactivated when OD-SSB or SSB adaptation is disabled. Alternatively, the network may configure (in SIB) a threshold SSB periodicity. RACH adaptation may be implicitly triggered when the specified SSB periodicity is below this threshold. RACH adaptation may be implicitly deactivated when the SSB periodicity is greater than or equal to this threshold.

For conditional triggering via a preamble transmission number, a specific preamble retransmission number in RACH can indicate that the network is overloaded. In SIB, the network may configure a threshold preamble retransmission number. RACH adaptation may be implicitly triggered when the indicated preamble retransmission number is above this threshold. In some examples, the UE 102 starts with the legacy RACH resource and uses additional RACH resources for RACH adaptation when this condition is met. After switching to the additional RACH resource(s), the UE 102 may not switch back to the legacy RACH resource. When another RACH procedure is triggered, the UE 102 starts with the legacy RACH resource.

Some aspects of the present disclosure relate to conditional triggering via a joint signaling indicator. In Rel-19 NES, OD-SSB, SSB adaptation and RACH adaptation can be used for system overload scenarios. In some implementations, the network can configure one signaling to simultaneously trigger RACH adaptation and other NES feature (e.g., OD-SSB). RACH adaptation can be implicitly triggered when a MAC-CE that triggers OD-SSB transmission is received. RACH adaptation can be implicitly disabled when OD-SSB transmission is terminated, including reception of a deactivation MAC-CE or after configured M SSB transmission occasions. Additionally, or alternatively, RACH adaptation can be implicitly triggered when a group common DCI that triggers SSB adaptation is received. RACH adaptation may be implicitly disabled when a group common DCI that stops SSB adaptation is received.

FIG. 2 illustrates an example PRACH resource diagram 200, according to some implementations. The PRACH resource diagram 200 shows two sets of random access opportunities available to UEs (such as the UE 102) in a time-domain sequence of SSB transmissions. In FIG. 2, there are two successive SSB beams associated with respective random access occasions. As described herein, legacy PRACH resources 202 are configured with a relatively sparse periodicity and a uniform spatial mapping for legacy UEs. In accordance with aspects of the present disclosure, additional PRACH resources 204 may be dynamically activated for Rel-19 UEs when network load conditions call for increased RACH capacity.

As described with reference to FIG. 1, the base station 104 may transmit SSBs at fixed intervals to enable initial access and measurement reporting. At each SSB transmission occasion, the base station 104 can provide a secondary set of PRACH occasions (e.g., the additional PRACH resources 204) to augment the legacy PRACH resources 202 without altering the timing or spatial pattern of the original SSB beams. The resource diagram 200 illustrates how PRACH resource allocation in the time domain can be semi-statically or dynamically adapted to support NR NES objectives. When network traffic is detected to be high (e.g., based on UAC thresholds or paging configuration parameters), the base station 104 can send a paging DCI 1_0 (scrambled with a P-RNTI) with a 1-bit flag and a validity time duration. A Rel-19 UE (such as the UE 102) that decodes this flag will then consider the additional PRACH resources 204 to be active for the duration of the timer, which increases random access capacity without affecting legacy UE behavior on the legacy PRACH resources 202.

In some examples, a CONNECTED Rel-19 UE may be configured to monitor a single PO per cycle. Upon reception of a PDCCH order carrying DCI 1_0 with the activation flag set, the UE may consider the additional PRACH resources 204 as available for RACH transmission. If the Rel-19 UE initiates a random access procedure during that SSB period, it can select one of the additional PRACH resources 204 to reduce the probability of signal collisions with other legacy UEs. If the network subsequently transmits a deactivation indication or the DCI validity timer expires, the UE can revert to using the legacy PRACH resources 202 for subsequent access attempts.

FIG. 3 illustrates an example UAC scheme 300, according to some implementations. The UAC scheme 300 is a mechanism by which the UE 102 can determine whether to proceed with a RACH procedure under varying load conditions. In the wireless network 100, the base station 104 and associated core network (CN) functions broadcast access control parameters to all UEs. FIG. 3 abstracts that broadcast and decision-making flow into two logical protocol layers, the non-access spectrum (NAS) 306 that handles higher-layer mobility and session management functions and the access spectrum (AS) 308 that carries out lower-layer procedures necessary to initiate uplink transmission. FIG. 3 illustrates how UAC can serve as a conditional trigger within the broader RACH adaptation framework described above.

The UAC scheme 300 starts with the base station 104 broadcasting barring information 304 in SIB1 or via dedicated signaling. The barring information 304 is provided in conjunction with an access category, an access identity, an establishment cause, and a probability that governs whether a given access attempt will be permitted. Upon reception of this information, the NAS 306 forwards the relevant parameters to the AS 308. In some cases, the AS uses an Access Class Barring (ACB) algorithm to generate an ACB result by drawing a random number (e.g., "coin flip") against the received barring probability. The ACB result returned by the AS 308 indicates whether the UE 102 is presently barred from transmission.

If the ACB result indicates that the UE is not barred, the AS 308 may proceed with an access attempt 302, whereby the AS 308 initiates a PRACH transmission for the UE 102. In some implementations, the UE 102 will select one of the legacy PRACH resources 202 or, if a dynamic trigger has been active, one of the additional PRACH resources 204 for this access attempt 302. The output from the AS 308 thus triggers contention-based random access process in the RAN.

In response to the access attempt 302, the base station 104 may respond with either a Random Access Response (RAR) or a barring message, and the NAS 306 will again interpret any new barring information 304 that is carried in subsequent SIB updates. The UAC scheme 300 of FIG. 3 represents one possible conditional trigger for semi-static RACH adaptation: by differentiating UEs according to access category or access identity, and by applying per-category barring thresholds, the network can implicitly throttle access when load is high without relying solely on group-common DCI. Accordingly, the UAC scheme 300 enables the network to activate or deactivate additional PRACH resources in response to real-time network conditions.

FIG. 4 illustrates an example paging adaptation scheme 400 and an example paging adaptation scheme 401, according to some implementations. The paging adaptation scheme 400 shows PF bundling, where the first four paging frames (PF1-PF4) are bundled into a single contiguous burst at the start of each 32-frame cycle (T = 32 frames). In some implementations, the network can set the PF interval parameter N to T/8 (i.e., 4 frames) and increase the number of paging occasions per frame (Ns) to 4, thereby concentrating four POs into PF1 while preserving the overall paging capacity. In some implementations, (SFN + PF_offset) mod T = (UE _ID Mod N), where SFN is a system frame number (SFN) and UE_ID is a UE identifier. A CONNECTED UE 102 that supports NES functions may be configured to monitor only one burst (PF1) in each paging cycle for any paging DCI 1_0 carrying a 1-bit RACH adaptation flag. After decoding the paging DCI or confirming there are no paging messages pending, the base station 104 can spend the remaining 28 frames in a low-power state, since PF2-PF8 have effectively been "moved" into the burst of PF1.

By contrast, the paging adaptation scheme 401 illustrates how POs can be concentrated into one PF. For example, the base station 104 may concentrate paging transmissions into two distinct clusters within the same T = 32-frame period. In one example, a first cluster (PF1) may be configured with Ns = 8 POs and N = T/32 (e.g., 1 frame), while a second cluster (PF2) at the end of the cycle may use Ns = 4 and N = T/16 (e.g., 2 frames). In some implementations, (SFN + PF_offset) mod T = (T div N)*(UE_ID Mod N), where N=1/T. The UE 102 can determine these clusters via PF/PO computation and "wake up" for PF1 and PF2, thereby allowing the base station 104 to concentrate all POs into two narrow windows. This two-tier clustering allows the network to spend even more time in sleep mode.

Both of the adaptation schemes depicted in FIG. 4 build on the static paging configuration described in FIG. 1, where PFs and POs are fixed in both the time and spatial domain. The paging adaptation scheme 400 and the paging adaptation scheme 401 also complement the dynamic PRACH adaptation scheme of FIG. 2 and the UAC-based conditional triggering scheme of FIG. 3 by offering alternative semi-static paging patterns that can be enabled or disabled without incurring additional group-common DCI overhead. For example, the base station 104 can signal the choice between these paging adaptation schemes via a new bit in SIB1 for IDLE/INACTIVE UEs or via DCI 1_0 for CONNECTED UEs, so the UE 102 can adjust its monitoring behavior accordingly: either one PF burst per cycle (as shown in the paging adaptation scheme 400) or two PF clusters per cycle (as shown in the paging adaptation scheme 401).

FIG. 5 illustrates an example OD-SSB transmission scheme 500 and an example OD-SSB transmission scheme 501, according to some implementations. In the OD-SSB transmission scheme 500, a primary cell (PCell) 504 continues to broadcast SSBs 508 at a fixed periodicity ("always-on"), while a secondary cell (SCell) 506 is silent until an on-demand SSB 502 is triggered. In some implementations, the PCell 504 broadcasts SSBs 508 according to a baseline periodicity defined in system information, which provides support for legacy UEs and initial access procedures. When the network determines that additional measurement opportunities or handover preparation is needed (e.g., based on signal quality reports or impending SCell activation), the base station 104 sends a MAC-CE to trigger one or more on-demand SSB bursts on the SCell 506. These OD-SSB transmissions provide UEs (such as the UE 102) with additional synchronization reference points without requiring the SCell 506 to remain active at all times.

In the OD-SSB transmission scheme 501, the SCell 506 transmits both periodic ("always-on") and OD-SSB transmissions. In this scheme, the PCell 504 continues broadcasting according to a defined SSB schedule, and the SCell 506 broadcasts a baseline always-on SSB (much like the PCell 504) to provide continuous measurement and mobility support. When a conditional OD-SSB trigger is detected, the SCell 506 may send a burst of OD-SSB 502 transmissions between the periodic always-on SSBs 508. The OD-SSBs 502 may be grouped together in a cluster of M frames, after which the SCell 506 can return to its normal periodic SSB schedule. This hybrid approach can help reduce the latency of SCell activation and handover measurement without permanently causing interference or increasing power consumption on the SCell 506.

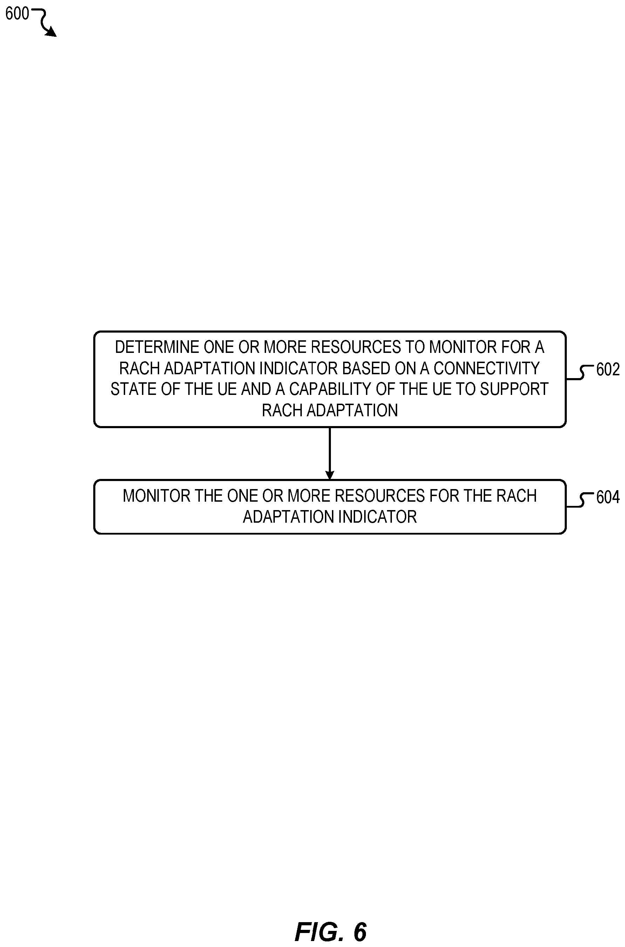

FIG. 6 illustrates a flowchart of an example method 600 for RACH adaptation, according to some implementations. For clarity of presentation, the method 600 is described in the context of the preceding figures. For example, the method 600 can be performed by a UE, such as the UE 102 of FIG. 1. The method 600 can also be performed by any suitable system, environment, software, hardware, or combination thereof. In some implementations, operations of the method 600 can be run in parallel, in combination, in loops, or in any order. The example method 600 shown in FIG. 6 can be modified or reconfigured to include additional, fewer, or different steps (not shown in FIG. 6), which can be performed in the order shown or in a different order.

At 602, the UE determines one or more resources to monitor for a RACH adaptation indicator based on a connectivity state of the UE and a capability of the UE to support RACH adaptation.

At 604, the UE monitors the one or more resources for the RACH adaptation indicator.

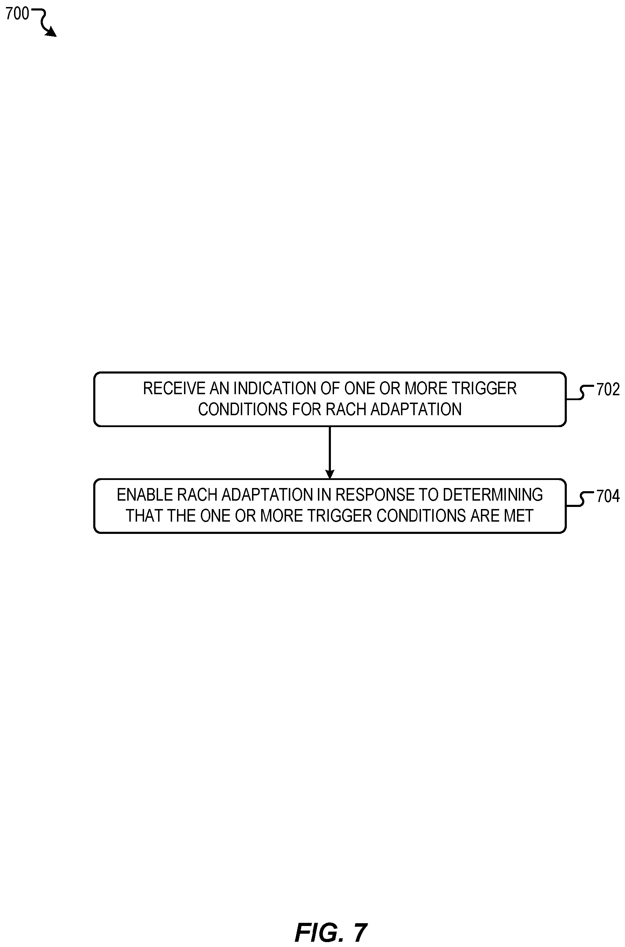

FIG. 7 illustrates a flowchart of an example method 700 for RACH adaptation, according to some implementations. For clarity of presentation, the method 700 is described in the context of the preceding figures. For example, the method 700 can be performed by a UE, such as the UE 102 of FIG. 1. The method 700 can also be performed by any suitable system, environment, software, hardware, or combination thereof. In some implementations, operations of the method 700 can be run in parallel, in combination, in loops, or in any order. The example method 700 shown in FIG. 7 can be modified or reconfigured to include additional, fewer, or different steps (not shown in FIG. 7), which can be performed in the order shown or in a different order.

At 702, the UE receives an indication of one or more trigger conditions for RACH adaptation.

At 704, the UE enables RACH adaptation in response to determining that the one or more trigger conditions are met.

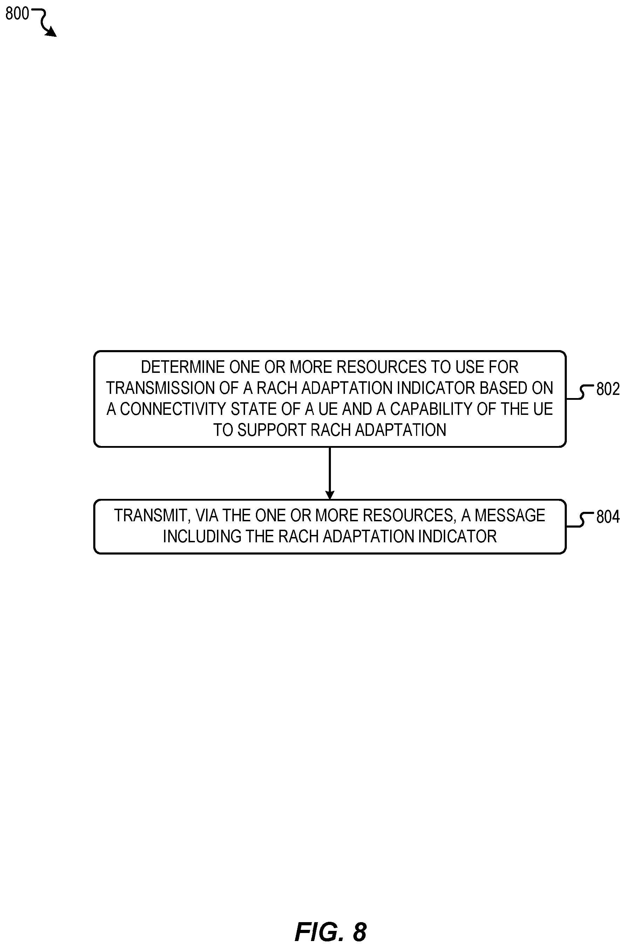

FIG. 8 illustrates a flowchart of an example method 800 for RACH adaptation, according to some implementations. For clarity of presentation, the method 800 is described in the context of the preceding figures. For example, the method 800 can be performed by an access node, such as the base station 104 of FIG. 1. The method 800 can also be performed by any suitable system, environment, software, hardware, or combination thereof. In some implementations, operations of the method 800 can be run in parallel, in combination, in loops, or in any order. The example method 800 shown in FIG. 8 can be modified or reconfigured to include additional, fewer, or different steps (not shown in FIG. 8), which can be performed in the order shown or in a different order.

At 802, the access node determines one or more resources to use for transmission of a RACH adaptation indicator based on a connectivity state of a UE (such as the UE 102 of FIG. 1) and a capability of the UE to support RACH adaptation.

At 804, the access node transmits, via the one or more resources, a message including the RACH adaptation indicator.

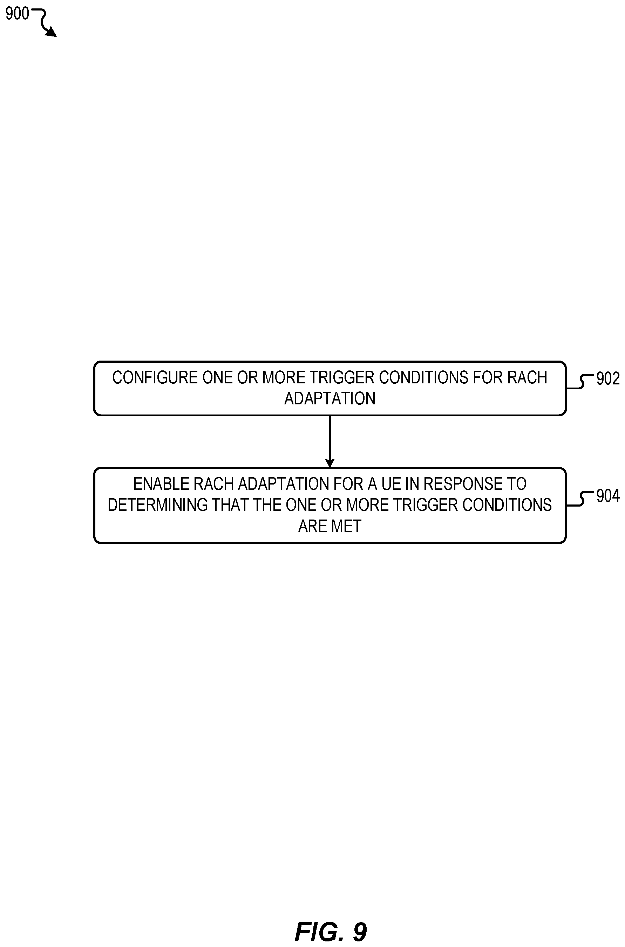

FIG. 9 illustrates a flowchart of an example method 900 for RACH adaptation, according to some implementations. For clarity of presentation, the method 900 is described in the context of the preceding figures. For example, the method 900 can be performed by an access node, such as the base station 104 of FIG. 1. The method 900 can also be performed by any suitable system, environment, software, hardware, or combination thereof. In some implementations, operations of the method 900 can be run in parallel, in combination, in loops, or in any order. The example method 900 shown in FIG. 9 can be modified or reconfigured to include additional, fewer, or different steps (not shown in FIG. 9), which can be performed in the order shown or in a different order.

At 902, the access node configures one or more trigger conditions for RACH adaptation.

At 904, the access node enables RACH adaptation for a UE (such as the UE 102 of FIG. 1) in response to determining that the one or more trigger conditions are met.

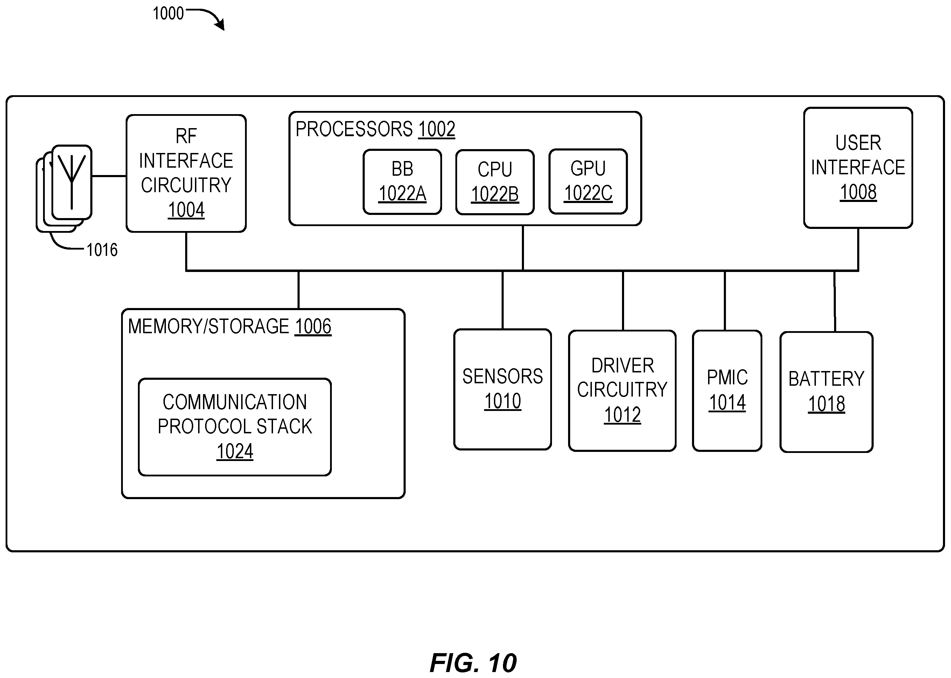

FIG. 10 illustrates an example UE 1000, according to some implementations. The UE 1000 may be similar to and/or substantially interchangeable with the UE 102 of FIG. 1. The UE 1000 can be any mobile or non-mobile computing device, such as, for example, a mobile phone, computer, tablet, industrial wireless sensor, video device (for example, a camera or video camera), wearable device (for example, a smart watch), relaxed-IoT device, etc.

The UE 1000 can include processor 1002, RF interface circuitry 1004, memory/storage 1006, user interface 1008, sensors 1010, driver circuitry 1012, power management integrated circuit (PMIC) 1014, one or more antenna(s) 1016, and/or battery 1018. The components of the UE 1000 can be implemented as integrated circuits (ICs), portions thereof, discrete electronic devices, or other modules, logic, hardware, software, firmware, or a combination thereof. The block diagram of FIG. 10 shows a high-level view of some of the components of the UE 1000. However, some of the components shown can be omitted, additional components may be present, and a different arrangement of the components shown can be used in other implementations.

The components of the UE 1000 may be coupled with various other components over one or more interconnects 1020, which can represent any type of interface, input/output, bus (local, system, or expansion), transmission line, trace, optical connection, etc., that allows various circuit components (on common or different chips or chipsets) to interact with one another.

The processor 1002 may include one or more processors. For example, the processor 1002 may include processor circuitry such as, for example, baseband processor circuitry (BB) 1022A, central processor unit circuitry (CPU) 1022B, and graphics processor unit circuitry (GPU) 1022C. The processor 1002 may include any type of circuitry or processor circuitry that executes or otherwise operates computer-executable instructions, such as program code, software modules, or functional processes from memory/storage 1006 to cause the UE 1000 to perform operations described herein.

In some implementations, the baseband processor circuitry 1022A may access a communication protocol stack 1024 in the memory/storage 1006 to communicate over a 3GPP compatible network. In general, the baseband processor circuitry 1022A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and protocol data unit (PDU) layer; and perform control plane functions at a PHY layer, MAC layer, RLC layer, PDCP layer, RRC layer, and a non-access stratum (NAS) layer. In some implementations, the PHY layer operations may additionally/alternatively be performed by the components of the RF interface circuitry 1004. The baseband processor circuitry 1022A may generate or process baseband signals or waveforms that carry information in 3GPP-compatible networks. In some implementations, the waveforms for NR may be based cyclic prefix orthogonal frequency division multiplexing (CP-OFDM) in the uplink or downlink, and discrete Fourier transform spread OFDM (DFT-S-OFDM) in the uplink.

The memory/storage 1006 may include one or more non-transitory, computer-readable media that includes instructions (for example, communication protocol stack 1024) that can be executed by the processor 1002 to cause the UE 1000 to perform various operations described herein. The memory/storage 1006 can include any type of volatile or non-volatile memory that may be distributed throughout the UE 1000. In some implementations, the memory/storage 1006 can be located on the processor 1002 itself (for example, L1 and L2 cache), while other memory/storage 1006 is external to the processor 1002 but accessible thereto via a memory interface. The memory/storage 1006 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1004 may include transceiver circuitry and radio frequency front module (RFEM) that allows the UE 1000 to communicate with other devices over a radio access network. The RF interface circuitry 1004 can include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 1016 and proceed to filter and amplify (with a low-noise amplifier) the signal. The signal may be provided to a receiver of the transceiver that downconverts the RF signal into a baseband signal that is provided to the baseband processor.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 1016. In various implementations, the RF interface circuitry 1004 may be configured to transmit/receive signals in a manner compatible with NR access technologies.

The antenna(s) 1016 may include one or more antenna elements to convert electrical signals into radio waves to travel through the air and to convert received radio waves over the air into electrical signals. In some implementations, the antenna elements may be arranged into one or more antenna panels. The antenna(s) 1016 may have antenna panels that are omnidirectional, directional, or a combination thereof, to enable beamforming and multiple input, multiple output communications. The antenna(s) 1016 can include any/all of microstrip antennas, printed antennas fabricated on the surface of one or more printed circuit boards, patch antennas, phased array antennas, etc. The antenna(s) 1016 may have one or more panels designed for one or more specific frequency bands, such as bands in FR1 or FR2.

The user interface 1008 includes various input/output (I/O) devices designed to enable user interaction with the UE 1000. The user interface 1008 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors), with the output of characters, graphics, multimedia objects, and the like being generated or produced from the operation of the UE 1000.

The sensors 1010 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1012 may include software and hardware elements that operate to control particular devices that are embedded in the UE 1000, attached to the UE 1000, or otherwise communicatively coupled with the UE 1000. The driver circuitry 1012 may include individual drivers allowing other components to interact with or control various input/output (I/O) devices that may be present within, or connected to, the UE 1000. For example, driver circuitry 1012 may include a display driver to control and allow access to a display device, a touchscreen driver to control and allow access to a touchscreen interface, sensor drivers to obtain sensor readings of sensors 1010 and control and allow access to sensors 1010, drivers to obtain actuator positions of electro-mechanic components or control and allow access to the electro-mechanic components, a camera driver to control and allow access to an embedded image capture device, audio drivers to control and allow access to one or more audio devices.

The PMIC 1014 can manage power provided to various components of the UE 1000. In particular, with respect to the processor 1002, the PMIC 1014 may control power-source selection, voltage scaling, battery charging, or DC-to-DC conversion.

In some implementations, the PMIC 1014 may control, or otherwise be part of, various power saving mechanisms of the UE 1000. A battery 1018 may power the UE 1000, although in some examples the UE 1000 may be mounted deployed in a fixed location and may have a power supply coupled to an electrical grid. The battery 1018 may be a lithium ion battery, a metal-air battery, such as a zinc-air battery, an aluminum-air battery, a lithium-air battery, and the like. In some implementations, such as in vehicle-based applications, the battery 1018 may be a typical lead-acid automotive battery.

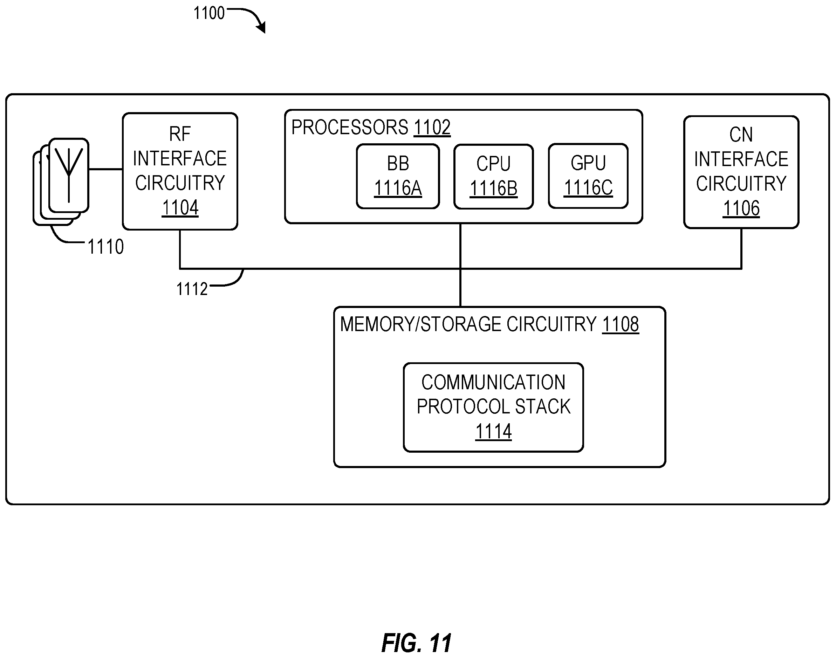

FIG. 11 illustrates an example access node 1100, according to some implementations. The access node 1100 (also referred to as a base station or gNB) may be similar to and/or substantially interchangeable with base station 104. The access node 1100 can include one or more of processor 1102, RF interface circuitry 1104, core network (CN) interface circuitry 1106, memory/storage circuitry 1108, and one or more antenna(s) 1110. The processor 1102 may include any type of circuitry or processor circuitry that executes or otherwise operates computer-executable instructions, such as program code, software modules, or functional processes from memory/storage circuitry 1108 to cause the access node 1100 to perform operations as described herein.

The components of the access node 1100 may be coupled with various other components over one or more interconnects 1112. The processor 1102, RF interface circuitry 1104, memory/storage circuitry 1108 (including communication protocol stack 1114), antenna(s) 1110, and interconnects 1112 may be similar to like-named elements shown and described with respect to FIG. 10. For example, the processor 1102 may include processor circuitry such as, for example, baseband processor circuitry (BB) 1116A, central processor unit circuitry (CPU) 1116B, and graphics processor unit circuitry (GPU) 1116C.

The CN interface circuitry 1106 may provide connectivity to a core network, for example, a 5th Generation Core network (5GC) using a 5GC-compatible network interface protocol such as carrier Ethernet protocols, or some other suitable protocol. Network connectivity may be provided to/from the access node 1100 via a fiber optic or wireless backhaul. The CN interface circuitry 1106 may include one or more dedicated processors or FPGAs to communicate using one or more of the aforementioned protocols. In some implementations, the CN interface circuitry 1106 may include multiple controllers to provide connectivity to other networks using the same or different protocols.

As used herein, the terms "access node," "access point," or the like refers to equipment that provides the radio baseband functions for data and/or voice connectivity between a network and one or more users. An access node may also be referred to as a base station (BS), gNB, RAN node, eNB, NodeB, roadside unit (RSU), transmission and reception point (TRP), TRxP, and so on. An access node can include ground stations (e.g., terrestrial access points) or satellite stations providing coverage within a geographic area (e.g., a cell). As used herein, the term "NG RAN node" or the like refers to an access node 1100 that operates in an NR or 5G system (for example, a gNB), and the term "E-UTRAN node" or the like refers to an access node 1100 that operates in an LTE or 4G system (e.g., an eNB). According to various implementations, the access node 1100 can be implemented as one or more of a dedicated physical device, such as a macrocell base station, and/or a low power base station for providing femtocells, picocells or other cells with smaller coverage areas, smaller user capacity, or higher bandwidth (compared to macrocells).

In some implementations, the access node 1100 can be implemented as one or more software entities running on server computers as part of a virtual network, which may be referred to as a cloud RAN (CRAN) and/or a virtual baseband unit pool (vBBUP). In vehicle-to-everything (V2X) scenarios, the access node 1100 may be or act as an RSU, which refers to any transportation infrastructure entity used for V2X communications. An RSU can be implemented in or by a suitable RAN node or a stationary (or relatively stationary) UE, where an RSU implemented in or by a UE is referred to as a "UE-type RSU," an RSU implemented in or by an eNB is referred to as an "eNB-type RSU," an RSU implemented in or by a gNB is referred to as a "gNB-type RSU," and so forth.

In the preceding description, various components are described as performing a task or tasks. Such descriptions should be interpreted as including the phrase "configured to." Reciting a component that is configured to perform one or more tasks is expressly intended not to invoke 35 U.S.C. § 112(f) interpretation for that component.

In some embodiments, one or more of the components described in the preceding figures may be configured to perform one or more operations, techniques, processes, or methods set forth in the examples section below. For example, the baseband circuitry described in connection with one or more of the preceding figures may be configured to operate in accordance with one or more of the examples set forth below. For another example, circuitry associated with a UE, access node, base station, or network element may be configured to operate in accordance with one or more of the examples set forth below.

Example 1 is a method including: determining one or more resources to monitor for a RACH adaptation indicator based on a connectivity state of a UE and a capability of the UE to support RACH adaptation; and monitoring the one or more resources for the RACH adaptation indicator.

Example 2 includes the method of example 1, where the connectivity state of the UE includes a RRC CONNECTED state, an RRC IDLE state, or an RRC INACTIVE state.

Example 3 includes the method of any of examples 1-2, where monitoring the one or more resources includes monitoring at least one PO per paging cycle or per system information modification period for paging messages with a RACH adaptation indicator while the UE is in an RRC CONNECTED state.

Example 4 includes the method of any of examples 1-3, further including receiving DCI format 1_0 with a PDCCH order including the RACH adaptation indicator.

Example 5 includes the method of example 4, further including overwriting a RACH resource activation or deactivation status indicated by a DCI associated with a P-RNTI.

Example 6 includes the method of any of examples 1-5, further including receiving a SIB 1 with a bit indicating whether semi-static RACH adaptation is enabled or disabled.

Example 7 includes the method of example 6, where reception of the SIB1 occurs while the UE is in an RRC IDLE state.

Example 8 includes the method of any of examples 6-7, where reception of the SIB1 occurs while the UE is in an RRC INACTIVE state.

Example 9 includes the method of any of examples 6-8, where semi-static RACH adaptation is enabled and the method further includes: discarding RACH adaptation indicators from paging DCI messages when the bit is set to 1.

Example 10 includes the method of any of examples 6-9, where semi-static RACH adaptation is disabled and the method further includes: monitoring paging DCI messages for RACH adaptation indicators when the bit is set to 0.

Example 11 includes the method of any of examples 6-10, where semi-static RACH adaptation is enabled and the method further includes: monitoring paging DCI messages for RACH adaptation indicators, irrespective of whether the bit is set to 0 or 1.

Example 12 includes the method of example 11, further including: identifying a misaligned activation or deactivation status between a semi-static RACH adaptation indication and a dynamic RACH adaptation indication in a paging DCI message; and overwriting the semi-static RACH adaptation indication with the dynamic RACH adaptation indication from the paging DCI message.

Example 13 includes the method of any of examples 6-12, where monitoring the one or more resources includes monitoring a next BCCH occasion for a SIB1 update after receiving a paging short message.

Example 14 includes the method of any of examples 6-13, where monitoring the one or more resources includes monitoring a current BCCH period for a SIB1 update after receiving a paging short message when the bit in SIB1 indicates that semi-static RACH adaptation is enabled.

Example 15 includes the method of any of examples 6-14, where monitoring the one or more resources includes monitoring a current BCCH period for a SIB1 update after receiving a paging short message that enables immediate acquisition of SIB1 updates.

Example 16 includes the method of any of examples 6-15, where monitoring the one or more resources includes monitoring a next BCCH period for a SIB1 update after receiving a paging short message that disables immediate acquisition of SIB1 updates.

Example 17 includes the method of any of examples 1-16, further including receiving a SIB1 while the UE is in an RRC CONNECTED state, the SIB1 including a bit indicating whether semi-static RACH adaptation is enabled or disabled.

Example 18 includes the method of example 17, where monitoring the one or more resources includes monitoring at least one PO per BCCH modification period or per paging cycle for SIB1 updates when the bit in SIB1 indicates that semi-static RACH adaptation is enabled.

Example 19 includes the method of any of examples 1-18, further including receiving a handover command with a bit indicating whether RACH adaptation is enabled for a target cell.

Example 20 includes the method of example 19, further including enabling RACH adaptation for the target cell during handover in accordance with the handover command.

Example 21 includes the method of any of examples 19-20, further including receiving, via the target cell, a SIB1 including a bit indicating whether RACH adaptation is enabled for the target cell.

Example 22 includes the method of example 21, further including enabling RACH adaptation for the target cell based on the bit in the handover command and the bit in the SIB1.

Example 23 is a method including: receiving an indication of one or more trigger conditions for RACH adaptation; and enabling RACH adaptation for a UE in response to determining that the one or more trigger conditions are met.

Example 24 includes the method of example 23, where receiving the indication of the one or more trigger conditions includes receiving a SIB that indicates a UAC threshold for enabling RACH adaptation.

Example 25 includes the method of example 24, where enabling RACH adaptation for the UE includes enabling RACH adaptation in response to determining that a UAC access probability of the UE satisfies the UAC threshold indicated by the SIB.

Example 26 includes the method of any of examples 24-25, where a set of UAC thresholds are configured for RACH adaptation, each UAC threshold corresponding to a specific combination of access category and access identity.

Example 27 includes the method of any of examples 24-26, where one UAC threshold is configured for all access categories and access identities.

Example 28 includes the method of any of examples 24-27, where the SIB further indicates a probability to use for determining whether to activate RACH adaptation.

Example 29 includes the method of any of examples 23-28, where determining that the one or more trigger conditions are met includes determining that paging adaptation is enabled for the UE.

Example 30 includes the method of example 29, where RACH adaptation is disabled for the UE when paging adaptation is disabled.

Example 31 includes the method of any of examples 23-30, where enabling RACH adaptation includes enabling RACH adaptation during a PF derived from a paging configuration of the UE.

Example 32 includes the method of example 31, where RACH adaptation is disabled in frames other than the PF derived from the paging configuration of the UE.

Example 33 includes the method of any of examples 31-32, where RACH adaptation is enabled in a number of frames that follow the PF derived from the paging configuration of the UE, and where the number of frames is configured by a SIB.

Example 34 includes the method of any of examples 23-33, where determining that the one or more trigger conditions are met includes determining that SSB or OD-SSB adaptation is enabled for the UE.

Example 35 includes the method of example 34, where RACH adaptation is disabled when SSB or OD-SSB adaptation is disabled for the UE.

Example 36 includes the method of any of examples 23-35, where determining that the one or more trigger conditions are met includes determining that an SSB periodicity is less than a network-configured threshold.

Example 37 includes the method of example 36, where RACH adaptation is disabled when the SSB periodicity is greater than or equal to the threshold.

Example 38 includes the method of any of examples 23-37, where determining that the one or more trigger conditions are met includes determining that a number of RACH preamble retransmissions performed by the UE is greater than a network-configured threshold.

Example 39 includes the method of any of examples 23-38, further including using a set of additional RACH resources configured for RACH adaptation when the one or more trigger conditions are met.

Example 40 includes the method of example 39, where the UE is unable to switch from the set of additional RACH resources to a default RACH resource after switching from the default RACH resource to the additional RACH resources.

Example 41 includes the method of example 40, further including using the default RACH resource in a subsequent RACH procedure.

Example 42 includes the method of any of examples 23-41, where receiving the indication of the one or more trigger conditions includes receiving a MAC control element (MAC-CE) that triggers RACH adaptation and OD-SSB adaptation.

Example 43 includes the method of example 42, further including disabling RACH adaptation after OD-SSB adaptation is deactivated.

Example 44 includes the method of example 43, where OD-SSB adaptation is deactivated by reception of a second MAC-CE or after a threshold number of SSB adaptation occasions has elapsed.

Example 45 includes the method of any of examples 23-44, where receiving the indication of the one or more trigger conditions includes receiving a group common DCI message that triggers RACH adaptation and SSB adaptation.

Example 46 includes the method of example 45, further including disabling RACH adaptation after receiving a second group common DCI message that deactivates SSB adaptation.

Example 47 is a method including: determining one or more resources to use for transmission of a RACH adaptation indicator based on a connectivity state of a UE and a capability of the UE to support RACH adaptation; and transmitting, via the one or more resources, a message including the RACH adaptation indicator.

Example 48 includes the method of example 47, where the connectivity state of the UE includes an RRC CONNECTED state, an RRC IDLE state, or an RRC INACTIVE state.

Example 49 includes the method of any of examples 47-48, further including transmitting DCI format 1_0 with a PDCCH order including the RACH adaptation indicator.

Example 50 includes the method of example 49, further including overwriting a RACH resource activation or deactivation status indicated by a DCI associated with a P-RNTI.

Example 51 includes the method of any of examples 47-50, further including transmitting a SIB1 with a bit indicating whether semi-static RACH adaptation is enabled or disabled.

Example 52 includes the method of example 51, where transmission of the SIB1 occurs while the UE is in an RRC IDLE state.

Example 53 includes the method of any of examples 51-52, where transmission of the SIB 1 occurs while the UE is in an RRC INACTIVE state.

Example 54 includes the method of any of examples 51-53, where transmitting the message via the one or more resources includes transmitting a SIB1 update in a next BCCH occasion after transmitting a paging short message.

Example 55 includes the method of any of examples 51-54, where transmitting the message via the one or more resources includes transmitting a SIB1 update in a current BCCH occasion when the bit in SIB1 indicates that semi-static RACH adaptation is enabled.

Example 56 includes the method of any of examples 51-55, where transmitting the message via the one or more resources includes transmitting a SIB1 update in a current BCCH occasion after transmitting a paging short message that enables immediate acquisition of SIB1 updates.

Example 57 includes the method of any of examples 51-56, where transmitting the message via the one or more resources includes transmitting a SIB1 update in a next BCCH occasion after transmitting a paging short message that disables immediate acquisition of SIB1 updates.

Example 58 includes the method of any of examples 47-57, further including transmitting a SIB1 while the UE is in an RRC CONNECTED state, the SIB1 including a bit indicating whether semi-static RACH adaptation is enabled or disabled.

Example 59 includes the method of any of examples 47-58, further including transmitting a handover command with a bit indicating whether RACH adaptation is enabled for a target cell.

Example 60 is a method including: configuring one or more trigger conditions for RACH adaptation; and enabling RACH adaptation for a UE in response to determining that the one or more trigger conditions are met.

Example 61 includes the method of example 60, where configuring the one or more trigger conditions includes transmitting a SIB that indicates a UAC threshold for enabling RACH adaptation.

Example 62 includes the method of example 61, where a set of UAC thresholds are configured for RACH adaptation, each UAC threshold corresponding to a specific combination of access category and access identity.

Example 63 includes the method of any of examples 61-62, where one UAC threshold is configured for all access categories and access identities.

Example 64 includes the method of any of examples 61-63, where the SIB further indicates a probability to use for determining whether to activate RACH adaptation.

Example 65 includes the method of any of examples 60-64, where determining that the one or more trigger conditions are met includes determining that paging adaptation is enabled for the UE.

Example 66 includes the method of example 65, where RACH adaptation is disabled for the UE when paging adaptation is disabled.

Example 67 includes the method of any of examples 60-66, where enabling RACH adaptation includes enabling RACH adaptation during a PF associated with a paging configuration of the UE.

Example 68 includes the method of example 67, where RACH adaptation is disabled in frames other than the PF associated with the paging configuration of the UE.

Example 69 includes the method of any of examples 67-68, where RACH adaptation is enabled in a number of frames that follow the PF associated with the paging configuration of the UE, and where the number of frames is configured by a SIB.

Example 70 includes the method of any of examples 60-69, where determining that the one or more trigger conditions are met includes determining that SSB or OD-SSB adaptation is enabled for the UE.

Example 71 includes the method of example 70, where RACH adaptation is disabled when SSB or OD-SSB adaptation is disabled for the UE.

Example 72 includes the method of any of examples 60-71, where determining that the one or more trigger conditions are met includes determining that an SSB periodicity is less than a network-configured threshold.

Example 73 includes the method of example 72, where RACH adaptation is disabled when the SSB periodicity is greater than or equal to the threshold.

Example 74 includes the method of any of examples 60-73, where determining that the one or more trigger conditions are met includes determining that a number of RACH preamble retransmissions performed by the UE is greater than a network-configured threshold.

Example 75 includes the method of any of examples 60-74, where configuring the one or more trigger conditions includes transmitting a MAC-CE that triggers RACH adaptation and OD-SSB adaptation.

Example 76 includes the method of example 75, further including disabling RACH adaptation after OD-SSB adaptation is deactivated.

Example 77 includes the method of example 76, where OD-SSB adaptation is deactivated by a second MAC-CE or after a threshold number of SSB adaptation occasions has elapsed.

Example 78 includes the method of any of examples 60-77, where configuring the one or more trigger conditions includes transmitting a group common DCI message that triggers RACH adaptation and SSB adaptation.

Example 79 includes the method of example 78, further including disabling RACH adaptation after transmitting a second group common DCI message that deactivates SSB adaptation.

Example 80 is an apparatus including: one or more processors; and memory storing instructions that, when executed, cause the one or more processors to perform the method of any of examples 1-75.

Example 81 is a baseband processor configured to perform the method of any of examples 1-75.

Any of the examples described above may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary methods, apparatus, baseband processors, and memory storing instructions are set out in the following items.
1. A method comprising:
   determining one or more resources to monitor for a random access channel (RACH) adaptation indicator based at least on a connectivity state of a user equipment (UE) and a capability of the UE to support RACH adaptation; and
   monitoring the one or more resources for the RACH adaptation indicator.
2. The method of item 1, wherein the connectivity state of the UE comprises a radio resource control (RRC) CONNECTED state, an RRC IDLE state, or an RRC INACTIVE state.
3. The method of item 1, wherein monitoring the one or more resources comprises monitoring at least one paging occasion (PO) per paging cycle or per system information modification period for paging messages with a RACH adaptation indicator while the UE is in an RRC CONNECTED state.
4. The method of item 1, further comprising receiving downlink control information (DCI) format 1_0 with a physical downlink control channel (PDCCH) order comprising the RACH adaptation indicator.
5. The method of item 4, further comprising overwriting a RACH resource activation or deactivation status indicated by a DCI associated with a paging radio network temporary identifier (P-RNTI).
6. The method of item 1, further comprising receiving a first system information block (SIB1) with a bit indicating whether semi-static RACH adaptation is enabled or disabled.
7. The method of item 6, wherein reception of the SIB1 occurs while the UE is in an RRC IDLE state.
8. The method of item 6, wherein reception of the SIB1 occurs while the UE is in an RRC INACTIVE state.
9. The method of item 6, wherein semi-static RACH adaptation is enabled and the method further comprises:
   discarding RACH adaptation indicators from paging DCI messages when the bit is set to 1.
10. The method of item 6, wherein semi-static RACH adaptation is disabled and the method further comprises:
   monitoring paging DCI messages for RACH adaptation indicators when the bit is set to 0.
11. The method of item 6, wherein semi-static RACH adaptation is enabled and the method further comprises:
   monitoring paging DCI messages for RACH adaptation indicators, irrespective of whether the bit is set to 0 or 1.
12. The method of item 11, further comprising:
   identifying a misaligned activation or deactivation status between a semi-static RACH adaptation indication and a dynamic RACH adaptation indication in a paging DCI message; and
   overwriting the semi-static RACH adaptation indication with the dynamic RACH adaptation indication from the paging DCI message.
13. The method of item 6, wherein monitoring the one or more resources comprises monitoring a next broadcast control channel (BCCH) occasion for a SIB1 update after receiving a paging short message.
14. The method of item 6, wherein monitoring the one or more resources comprises monitoring a current BCCH period for a SIB1 update after receiving a paging short message when the bit in SIB1 indicates that semi-static RACH adaptation is enabled.
15. The method of item 6, wherein monitoring the one or more resources comprises monitoring a current BCCH period for a SIB1 update after receiving a paging short message that enables immediate acquisition of SIB1 updates.
16. The method of item 6, wherein monitoring the one or more resources comprises monitoring a next BCCH period for a SIB1 update after receiving a paging short message that disables immediate acquisition of SIB1 updates.
17. The method of item 1, further comprising receiving a first system information block (SIB1) while the UE is in an RRC CONNECTED state, the SIB1 comprising a bit indicating whether semi-static RACH adaptation is enabled or disabled.
18. The method of item 17, wherein monitoring the one or more resources comprises monitoring at least one PO per BCCH modification period or per paging cycle for SIB1 updates when the bit in SIB1 indicates that semi-static RACH adaptation is enabled.
19. The method of item 1, further comprising receiving a handover command with a bit indicating whether RACH adaptation is enabled for a target cell.
20. The method of item 19, further comprising enabling RACH adaptation for the target cell during handover in accordance with the handover command.
21. The method of item 19, further comprising receiving, via the target cell, a SIB 1 comprising a bit indicating whether RACH adaptation is enabled for the target cell.
22. The method of item 21, further comprising enabling RACH adaptation for the target cell based at least on the bit in the handover command and the bit in the SIB1.
23. A method comprising:
   receiving an indication of one or more trigger conditions for RACH adaptation; and
   enabling RACH adaptation for a UE in response to determining that the one or more trigger conditions are met.
24. The method of item 23, wherein receiving the indication of the one or more trigger conditions comprises receiving a SIB that indicates a unified access control (UAC) threshold for enabling RACH adaptation.
25. The method of item 24, wherein enabling RACH adaptation for the UE comprises enabling RACH adaptation in response to determining that a UAC access probability of the UE satisfies the UAC threshold indicated by the SIB.
26. The method of item 24, wherein a plurality of UAC thresholds are configured for RACH adaptation, each UAC threshold corresponding to a specific combination of access category and access identity.
27. The method of item 24, wherein one UAC threshold is configured for all access categories and access identities.
28. The method of item 24, wherein the SIB further indicates a probability to use for determining whether to activate RACH adaptation.
29. The method of item 23, wherein determining that the one or more trigger conditions are met comprises determining that paging adaptation is enabled for the UE.
30. The method of item 29, wherein RACH adaptation is disabled for the UE when paging adaptation is disabled.
31. The method of item 23, wherein enabling RACH adaptation comprises enabling RACH adaptation during a paging frame (PF) derived from a paging configuration of the UE.
32. The method of item 31, wherein RACH adaptation is disabled in frames other than the PF derived from the paging configuration of the UE.
33. The method of item 31, wherein RACH adaptation is enabled in a number of frames that follow the PF derived from the paging configuration of the UE, and wherein the number of frames is configured by a SIB.
34. The method of item 23, wherein determining that the one or more trigger conditions are met comprises determining that synchronization signal block (SSB) or on-demand SSB (OD-SSB) adaptation is enabled for the UE.
35. The method of item 34, wherein RACH adaptation is disabled when SSB or OD-SSB adaptation is disabled for the UE.
36. The method of item 23, wherein determining that the one or more trigger conditions are met comprises determining that an SSB periodicity is less than a network-configured threshold.
37. The method of item 36, wherein RACH adaptation is disabled when the SSB periodicity is greater than or equal to the threshold.
38. The method of item 23, wherein determining that the one or more trigger conditions are met comprises determining that a number of RACH preamble retransmissions performed by the UE is greater than a network-configured threshold.
39. The method of item 23, further comprising using a set of additional RACH resources configured for RACH adaptation when the one or more trigger conditions are met.
40. The method of item 39, wherein the UE is unable to switch from the set of additional RACH resources to a default RACH resource after switching from the default RACH resource to the additional RACH resources.
41. The method of item 40, further comprising using the default RACH resource in a subsequent RACH procedure.
42. The method of item 23, wherein receiving the indication of the one or more trigger conditions comprises receiving a medium access control (MAC) control element (MAC-CE) that triggers RACH adaptation and OD-SSB adaptation.
43. The method of item 42, further comprising disabling RACH adaptation after OD-SSB adaptation is deactivated.
44. The method of item 43, wherein OD-SSB adaptation is deactivated by reception of a second MAC-CE or after a threshold number of SSB adaptation occasions has elapsed.
45. The method of item 23, wherein receiving the indication of the one or more trigger conditions comprises receiving a group common DCI message that triggers RACH adaptation and SSB adaptation.
46. The method of item 45, further comprising disabling RACH adaptation after receiving a second group common DCI message that deactivates SSB adaptation.
47. A method comprising:
   determining one or more resources to use for transmission of a RACH adaptation indicator based at least on a connectivity state of a UE and a capability of the UE to support RACH adaptation; and
   transmitting, via the one or more resources, a message comprising the RACH adaptation indicator.
48. The method of item 47, wherein the connectivity state of the UE comprises an RRC CONNECTED state, an RRC IDLE state, or an RRC INACTIVE state.
49. The method of item 47, further comprising transmitting DCI format 1_0 with a PDCCH order comprising the RACH adaptation indicator.
50. The method of item 49, further comprising overwriting a RACH resource activation or deactivation status indicated by a DCI associated with a P-RNTI.
51. The method of item 47, further comprising transmitting a SIB1 with a bit indicating whether semi-static RACH adaptation is enabled or disabled.
52. The method of item 51, wherein transmission of the SIB1 occurs while the UE is in an RRC IDLE state.
53. The method of item 51, wherein transmission of the SIB1 occurs while the UE is in an RRC INACTIVE state.
54. The method of item 51, wherein transmitting the message via the one or more resources comprises transmitting a SIB1 update in a next BCCH occasion after transmitting a paging short message.
55. The method of item 51, wherein transmitting the message via the one or more resources comprises transmitting a SIB1 update in a current BCCH occasion when the bit in SIB1 indicates that semi-static RACH adaptation is enabled.
56. The method of item 51, wherein transmitting the message via the one or more resources comprises transmitting a SIB1 update in a current BCCH occasion after transmitting a paging short message that enables immediate acquisition of SIB1 updates.
57. The method of item 51, wherein transmitting the message via the one or more resources comprises transmitting a SIB1 update in a next BCCH occasion after transmitting a paging short message that disables immediate acquisition of SIB1 updates.
58. The method of item 47, further comprising transmitting a SIB1 while the UE is in an RRC CONNECTED state, the SIB1 comprising a bit indicating whether semi-static RACH adaptation is enabled or disabled.
59. The method of item 47, further comprising transmitting a handover command with a bit indicating whether RACH adaptation is enabled for a target cell.
60. A method comprising:
   configuring one or more trigger conditions for RACH adaptation; and
   enabling RACH adaptation for a UE in response to determining that the one or more trigger conditions are met.
61. The method of item 60, wherein configuring the one or more trigger conditions comprises transmitting a SIB that indicates a UAC threshold for enabling RACH adaptation.
62. The method of item 61, wherein a plurality of UAC thresholds are configured for RACH adaptation, each UAC threshold corresponding to a specific combination of access category and access identity.
63. The method of item 61, wherein one UAC threshold is configured for all access categories and access identities.
64. The method of item 61, wherein the SIB further indicates a probability to use for determining whether to activate RACH adaptation.
65. The method of item 60, wherein determining that the one or more trigger conditions are met comprises determining that paging adaptation is enabled for the UE.
66. The method of item 65, wherein RACH adaptation is disabled for the UE when paging adaptation is disabled.
67. The method of item 60, wherein enabling RACH adaptation comprises enabling RACH adaptation during a PF associated with a paging configuration of the UE.
68. The method of item 67, wherein RACH adaptation is disabled in frames other than the PF associated with the paging configuration of the UE.
69. The method of item 67, wherein RACH adaptation is enabled in a number of frames that follow the PF associated with the paging configuration of the UE, and wherein the number of frames is configured by a SIB.
70. The method of item 60, wherein determining that the one or more trigger conditions are met comprises determining that SSB or OD-SSB adaptation is enabled for the UE.
71. The method of item 70, wherein RACH adaptation is disabled when SSB or OD-SSB adaptation is disabled for the UE.
72. The method of item 60, wherein determining that the one or more trigger conditions are met comprises determining that an SSB periodicity is less than a network-configured threshold.
73. The method of item 72, wherein RACH adaptation is disabled when the SSB periodicity is greater than or equal to the threshold.
74. The method of item 60, wherein determining that the one or more trigger conditions are met comprises determining that a number of RACH preamble retransmissions performed by the UE is greater than a network-configured threshold.
75. The method of item 60, wherein configuring the one or more trigger conditions comprises transmitting a MAC-CE that triggers RACH adaptation and OD-SSB adaptation.
76. The method of item 75, further comprising disabling RACH adaptation after OD-SSB adaptation is deactivated.
77. The method of item 76, wherein OD-SSB adaptation is deactivated by a second MAC-CE or after a threshold number of SSB adaptation occasions has elapsed.
78. The method of item 60, wherein configuring the one or more trigger conditions comprises transmitting a group common DCI message that triggers RACH adaptation and SSB adaptation.
79. The method of item 78, further comprising disabling RACH adaptation after transmitting a second group common DCI message that deactivates SSB adaptation.
80. An apparatus comprising:
   one or more processors; and
   memory storing instructions that, when executed, cause the one or more processors to perform the method of any of items 1-75.
81. A baseband processor configured to perform the method of any of items 1-75.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
determining one or more resources to monitor for a random access channel (RACH) adaptation indicator based at least on a connectivity state of a user equipment (UE) and a capability of the UE to support RACH adaptation; and
monitoring the one or more resources for the RACH adaptation indicator.

2. The method of claim 1, wherein monitoring the one or more resources comprises monitoring at least one paging occasion (PO) per system information modification period for paging messages with a RACH adaptation indicator while the UE is in an RRC CONNECTED state.

3. The method of claim 2, further comprising receiving downlink control information (DCI) format 1_0 with a physical downlink control channel (PDCCH) order comprising the RACH adaptation indicator.

4. The method of claim 3, further comprising overwriting a RACH resource activation or deactivation status indicated by a DCI associated with a paging radio network temporary identifier (P-RNTI).

5. The method of any of the preceding claims, further comprising receiving a first system information block (SIB1) with a bit indicating whether semi-static RACH adaptation is enabled or disabled,
wherein when semi-static RACH adaptation is disabled, the method comprises monitoring paging DCI messages for RACH adaptation indicators when the bit is set to 0, and
wherein when semi-static RACH adaptation is enabled, the method comprises monitoring paging DCI messages for RACH adaptation indicators.

6. The method of claim 5, wherein monitoring the one or more resources comprises monitoring one of:
a next broadcast control channel (BCCH) occasion for a SIB1 update after receiving a paging short message,
a current BCCH period for a SIB1 update after receiving a paging short message when the bit in SIB1 indicates that semi-static RACH adaptation is enabled,
a current BCCH period for a SIB1 update after receiving a paging short message that enables immediate acquisition of SIB1 updates, or
a next BCCH period for a SIB1 update after receiving a paging short message that disables immediate acquisition of SIB1 updates.

7. The method of any of the preceding claims, further comprising receiving a first system information block (SIB1) while the UE is in an RRC CONNECTED state, the SIB1 comprising a bit indicating whether semi-static RACH adaptation is enabled or disabled, and
wherein monitoring the one or more resources comprises monitoring at least one PO per BCCH modification period or per paging cycle for SIB1 updates when the bit in SIB1 indicates that semi-static RACH adaptation is enabled.

8. The method of any of the preceding claims, further comprising:
receiving a handover command with a bit indicating whether RACH adaptation is enabled for a target cell;
enabling RACH adaptation for the target cell during handover in accordance with the handover command
receiving, via the target cell, a SIB1 comprising a bit indicating whether RACH adaptation is enabled for the target cell; and
enabling RACH adaptation for the target cell based at least on the bit in the handover command and the bit in the SIB 1.

9. A method comprising:
determining one or more resources to use for transmission of a RACH adaptation indicator based at least on a connectivity state of a UE and a capability of the UE to support RACH adaptation; and
transmitting, via the one or more resources, a message comprising the RACH adaptation indicator.

10. The method of claim 9, wherein the connectivity state of the UE comprises an RRC CONNECTED state.

11. The method of claim 10, further comprising:
transmitting DCI format 1_0 with a PDCCH order comprising the RACH adaptation indicator, and
optionally comprising overwriting a RACH resource activation or deactivation status indicated by a DCI associated with a P-RNTI.

12. The method of any of claims 9-11, further comprising transmitting a SIB1 with a bit indicating whether semi-static RACH adaptation is enabled or disabled, wherein transmission of the SIB1 occurs while the UE is in one of an RRC IDLE state, or an RRC INACTIVE state, and
optionally wherein transmitting the message via the one or more resources comprises transmitting one of:
a SIB1 update in a next BCCH occasion after transmitting a paging short message,
a SIB1 update in a current BCCH occasion when the bit in SIB1 indicates that semi-static RACH adaptation is enabled,
a SIB1 update in a current BCCH occasion after transmitting a paging short message that enables immediate acquisition of SIB1 updates, or
a SIB1 update in a next BCCH occasion after transmitting a paging short message that disables immediate acquisition of SIB1 updates.

13. The method of claim 12, further comprising transmitting a SIB1 while the UE is in an RRC CONNECTED state, the SIB1 comprising a bit indicating whether semi-static RACH adaptation is enabled or disabled, and
optionally further comprising transmitting a handover command with a bit indicating whether RACH adaptation is enabled for a target cell.

14. An apparatus comprising:
one or more processors; and
memory storing instructions that, when executed, cause the one or more processors to perform operations of any of claims 1-13.

15. Memory storing instructions that, when executed, cause one or more processors to perform operations of any of claims 1-13.
